# EUROPÄISCHE PATENTSCHRIFT

(11) **EP 3 638 926 B1**
(45) Veröffentlichungstag und Bekanntmachung des Hinweises auf die Patenterteilung: **23.06.2021**
(21) Anmeldenummer: 18726353.8
(22) Anmeldetag: 09.05.2018
(51) Int. Cl.: F16H 63/34, F16H 21/44

(54) **PARKSPERRE FÜR EIN AUTOMATGETRIEBE IN EINEM KRAFTFAHRZEUG**
PARK LOCK FOR AN AUTOMATIC TRANSMISSION IN A MOTOR VEHICLE
FREIN DE STATIONNEMENT DESTINÉ À UNE TRANSMISSION AUTOMATIQUE DANS UN VÉHICULE AUTOMOBILE

(30) Priorität: 14.06.2017 DE 102017210068
(43) Veröffentlichungstag der Anmeldung: 22.04.2020
(73) Patentinhaber: ZF Friedrichshafen AG, 88046 Friedrichshafen (DE)
(72) Erfinder: KLEIN, Julia, 88048 Friedrichshafen (DE); LIST, Matthias, 88045 Friedrichshafen (DE); MILLER, Tobias, 88289 Waldburg (DE); BRUGGER, Franz, 88048 Friedrichshafen (DE); AUSTERMANN, Bernd, 88074 Meckenbeuren (DE)
(74) Vertreter: ZF Friedrichshafen AG
(86) Internationale Anmeldenummer: PCT/EP2018/061957
(87) Internationale Veröffentlichungsnummer: WO 2018/228753

(56) Entgegenhaltungen:
- DE-A1-102008 011 115
- US-A1- 2008 220 935

## Beschreibung

Die vorliegende Erfindung bezieht sich auf eine Parksperre für ein Automatgetriebe in einem Kraftfahrzeug, gemäß dem Oberbegriff des Patentanspruchs 1.

Aus dem Stand der Technik sind Parksperrenmechanismen für Automatgetriebe bekannt. Sie umfassen eine auf einem Klinkenbolzen schwenkbar gelagerte Sperrklinke, die in ein mit dem Abtrieb des Getriebes verbundenes Parksperrenrad ein- oder ausrastet und ein auf einer Verbindungsstange zu einer auf einem Bolzen gelagerten Wählscheibe angeordnetes Sperrelement, das im gesperrten Zustand zwischen der Sperrklinke und einer Führungsplatte eingeklemmt ist, um ein Herausdrücken der Sperrklinke aus einer Zahnlücke des Parksperrenrades zu verhindern. Hierbei ist das Sperrelement auf der Verbindungsstange über ein Federelement angefedert, wobei das dem Sperrelement abgewandte Ende der Verbindungsstange an der Wählscheibe angelenkt ist, welche mit einer Kolbenstange eines hydraulisch betätigbaren, in einem Parksperrenzylinder angeordneten Parksperrenkolbens wirkverbunden ist, gegen die Kraft eines als Schenkelfeder ausgeführten Einlegefederelementes zum Auslegen der Parksperre und durch die Kraft des Einlegefederelementes zum Einlegen der Parksperre axial verschiebbar ist.

Zum Auslegen der Parksperre wird der Zylinderraum des Parksperrenzylinders bedruckt und schiebt den Parksperrenkolben und somit die Wählscheibe gegen die Federkraft der Schenkelfeder in die Stellung "P_aus" (Parksperre ausgelegt). Hierbei wird ein Magnetventil geschaltet, um den Parksperrenkolben des Parksperrenzylinders zusätzlich zu verriegeln.

Zum Einlegen der Parksperre wird das Magnetventil abgeschaltet, wobei der Zylinderraum des Parksperrenzylinders entlüftet und die mechanische Verriegelung des Parksperrenkolbens gelöst wird. Durch die vorgespannte Schenkelfeder an der Wählscheibe werden die Wählscheibe und somit der Parksperrenkolben in die Stellung "P_ein" (Parksperre eingelegt) gebracht. Hierbei wird das in der Regel als Sperrkegel ausgeführte Sperrelement auf der Führungsplatte unter die Sperrklinke verschoben und und wirkt dann derart auf die Sperrklinke, dass ein Zahn dieser Sperrklinke in eine korrespondierende Zahnlücke der Sperrverzahnung des Parksperrenrades eingreifen kann. Bei einer Zahn-auf-Zahn Stellung wird das Federelement, mittels dessen das Sperrelement auf der Verbindungsstange angefedert ist, vorgespannt, so dass, sobald ein Zahn der Sperrklinke eine Zahnlücke trifft, die Sperrklinke in die Sperrverzahnung des Parksperrenrades eingreift.

Dokument DE 10 2008 011115 A1 zeigt eine Parksperre für ein Automatikgetriebe umfassend eine auf einem Klinkenbolzen schwenkbar gelagerte Sperrklinke, die in ein Parksperrenrad ein-oder ausrastet, sowie ein auf einer Verbindungsstange zu einer Wählscheibe angeordnetes, über ein Federelemenl angefedertes Sperrelement, welches im eingelegten Zustand der Parksperre zwischen der Sperrklinke und einer Führungsplatte eingeklemmt ist, um ein Herausdrücken der Sperrklinke aus einer Zahnlücke des Parksperrenrades zu verhindern, wobei das dem Sperrelement abgewandte Ende der Verbindungsstange an der Wählscheibe angelenkt ist und wobei die Wählscheibe auf dem Klinkenbolzen drehbar gelagert ist. Aus der DE 10 2009 023 498 B4 ist eine Parksperrenanordnung für ein Kraftfahrzeug mit mindestens einer elektrisch angetriebenen Antriebsachse bekannt, umfassend ein Parksperrenrad auf einer Welle, die von einer E-Maschine antreibbar ist, einen Parksperrenaktuator mit einer Schubstange, die zum Einlegen der Parksperre mittels eines Sperrkegels gegen die Auslegekraft einer einen Klinkenbolzen umschließenden Schenkelfeder auf eine Parkklinke wirkt und achsparallel zur Parkklinke und senkrecht zum Klinkenbolzen angeordnet ist, einen Sperrsensor zum Erfassen der Schaltstellung der Parkklinke, eine Eingabeeinheit zum Erfassen eines Schaltbefehls zum Einlegen der Parksperre, einen Fahrgeschwindigkeitssensor zum Erfassen der aktuellen Kfz-Geschwindigkeit unterhalb einer vordefinierten Schwelle, unterhalb der ein Einlegen der Parksperre zulässig ist und ein elektronisches Steuergerät, welches sowohl den Parksperrenaktuator als auch die E-Maschine ansteuern kann, wobei das elektronische Steuergerät den Parksperrenaktuator nur dann zum Einlegen ansteuert, wenn die Kfz-Geschwindigkeit eine vordefinierte Schwelle nicht überschritten hat. Hierbei steuert das elektronische Steuergerät die E-Maschine zum Aufbringen eines Drehmomentes auf die mit dem Parksperrenrad verbundene Welle an, wenn trotz Ansteuerung der Parksperre zum Auslegen der Parkklinke der Sperrsensor detektiert, dass die Parkklinke weiterhin sperrt, so dass die E-Maschine den Antriebsstrang entgegen seiner Verspannungsrichtung entspannt und der Klinkenzahn aus dem Sperrprofil des Parksperrenrades ausschwenken kann.

Aus der DE 10 2011 084 392 A1 geht eine Getriebeparksperre hervor, mit einer im Wesentlichen translatorisch verlagerbaren Betätigungsstange, die ein Betätigungsorgan trägt, und mit einem im Wesentlichen rotatorisch verlagerbaren Sperrhebel, der ein Sperrorgan trägt, wobei zum Einlegen der Getriebeparksperre durch Verlagerung der Betätigungsstange der Sperrhebel aus einer Ruheposition desselben derart in eine Sperrposition desselben schwenkbar ist, dass das Sperrorgan in eine Ausnehmung eines einer Getriebewelle zugeordneten Getrieberads eingreift, und mit einer Einrichtung, welche das Betätigungsorgan der Betätigungsstange in der Ruheposition derselben von dem Sperrhebel abhebt. Die Betätigungsstange ist hierbei im Wesentlichen senkrecht zu einem Klinkenbolzen, um den der Sperrhebel schwenkbar angeordnet ist, angeordnet.

Ferner ist aus der DE 10 2014 225 603 A1 eine Anordnung für die mechanische und hydraulische Betätigung einer Getriebe-Parksperreneinheit bekannt, umfassend einen auf einem Gehäuse angeordneten Parksperrenaktuator, der zum Auslegen einer Parksperre hydraulisch betätigt wird, einen in einem gehäusefesten Zylinder verschiebbar angeordneten Hydraulikkolben, mit einer Kolbenstange, die mit dem Hydraulikkolben verbunden und mit einer auf die Parkklinke wirkenden Schubstange wirkverbunden ist, eine die Kolbenstange umschließende Druckfeder, welche axial zwischen dem Zylinder und einer die Kolbenstange umschließenden, in Richtung der Kolbenstangen-Mittelachse beweglichen Hülse eingespannt ist. Hierbei bewirkt die Federkraft der Druckfeder ein Einlegen der Parksperre, wenn der Parksperrenaktuator drucklos geschaltet ist, wobei die Schubstange mittels einer Hülsen-Querbohrung mit der Hülse und mittels eines Kolbenstangen-Langlochs mit der Kolbenstange im Wesentlichen rechtwinklig zur Kolbenstangen-Mittelachse verschwenkbar verbunden ist, derart, dass die axiale Erstreckung des Langlochs den Axialweg von Hülse und Schubstange begrenzt, wobei beim Einlegen der Parksperre die Schubstange von der Druckfeder mittels der Hülse axial verschoben wird und wobei beim Auslegen der Parksperre die Schubstange von dem druckbeaufschlagten Kolben mittels der Kolbenstange und des dem Hydraulikkolben abgewandten Anschlags im Langloch in axialer Richtung verschoben wird; die Hülse ist zudem über eine Notentriegelung in die zum Auslegen der Parksperre führende Richtung verschiebbar, ohne mit der Kolbenstange kraftschlüssig verbunden zu sein.

Der vorliegenden Erfindung liegt die Aufgabe zugrunde, eine Parksperre für ein Automatgetriebe in einem Kraftfahrzeug anzugeben, welche kompakt aufgebaut ist und einen geringen Bauraum erfordert. Ferner soll ein Verfahren zur Montage eines Mitnehmers der Wählscheibe in einen Parksperrenkolben bei einer Parksperre gemäß einer vorteilhaften Ausgestaltung der Erfindung angegeben werden.

Diese Aufgabe wird durch eine Parksperre mit den Merkmalen des Patentanspruchs 1 gelöst. Weitere erfindungsgemäße Ausgestaltungen und Vorteile gehen aus den Unteransprüchen hervor.

Ein Verfahren zur Montage eines Mitnehmers der Wählscheibe in einen Parksperrenkolben bei einer Parksperre gemäß einer vorteilhaften Ausgestaltung der Erfindung ist Gegenstand des Patentanspruchs 32.

Demnach wird eine Parksperre für ein Automatgetriebe in einem Kraftfahrzeug vorgeschlagen, umfassend eine auf einem Klinkenbolzen schwenkbar gelagerte Sperrklinke, die in ein mit dem Abtrieb des Automatgetriebes verbundenes Parksperrenrad ein- oder ausrastet und ein auf einer Verbindungsstange zu einer Wählscheibe angeordnetes Sperrelement, das im eingelegten - also gesperrten - Zustand der Parksperre zwischen der Sperrklinke und einer Führungsplatte eingeklemmt ist, um ein Herausdrücken der Sperrklinke aus einer Zahnlücke des Parksperrenrades zu verhindern, wobei das Sperrelement auf der Verbindungsstange über ein Federelement angefedert ist, wobei das dem Sperrelement abgewandte Ende der Verbindungsstange an der Wählscheibe angelenkt ist. Die Wählscheibe ist mit einem Parksperrenaktuator derart wirkverbunden, dass ein Auslegen der Parksperre durch eine gegen die Kraft eines Einlegefederelementes gerichtete Betätigungskraft des Parksperrenaktuators erfolgt, wohingegen ein Einlegen der Parksperre durch die Kraft des Einlegefederelementes erfolgt. Dabei ist die Verbindungsstange derart unterhalb der Sperrklinke angeordnet, dass die Bewegungsebene der Verbindungsstange im Wesentlichen parallel zur Bewegungsebene der Sperrklinke und im Wesentlichen senkrecht zum Klinkenbolzen angeordnet ist, und wobei die Wählscheibe auf dem Klinkenbolzen drehbar gelagert ist.

Vorzugsweise ist der Parksperrenaktuator als eine hydraulisch betätigbare Kolben/Zylinder-Einheit ausgebildet. Entsprechend umfasst der Parksperrenaktuator vorzugsweise einen in einem Steuergehäuse axial verschiebbaren, hydraulisch betätigbaren Parksperrenkolben, der mit einem Mitnehmer der Wählscheibe wirkverbunden ist.

Gemäß einer Ausgestaltung eines solchen hydraulisch betätigbaren Parksperrenaktuators ist der hydraulisch betätigbare Parksperrenkolben, mit dem die Wählscheibe wirkverbunden ist, im Wesentlichen parallel zur Verbindungsstange räumlich gesehen unterhalb der Verbindungsstange angeordnet. Vorzugsweise ist hierbei der Klinkenbolzen unter dem Parksperrenrad angeordnet.

Gemäß einer anderen Ausgestaltung eines solchen hydraulisch betätigbaren Parksperrenaktuators weisen Steuergehäuse und Parksperrenkolben jeweils eine Aussparung auf, durch die bzw. den ein mit der Wählscheibe drehfest verbundener oder mit der Wählscheibe einstückig ausgeführter Mitnehmer geführt ist, um zwischen der Wählscheibe und dem Parksperrenkolben eine Wirkverbindung herzustellen. Eine derartige Aussparung ist vorzugsweise schlitzförmig ausgebildet.

Gemäß einer vorteilhaften Weiterbildung weist der Mitnehmer im Aktuierungsbereich eine Nut auf, welche in einen mit dem Parksperrenkolben verbundenen Stift greift, wobei die Nut als gerader Schlitz oder nierenförmig ausgeführt sein kann. Der Stift ist senkrecht zur der Parksperrenkolben-Längsachse angeordnet. Durch diese Konzeption wird ein Aufprall zwischen dem Mitnehmer und Flächen des Parksperrenkolbens aufgrund des erforderlichen Montagefreigangs verhindert, der zu Eingrabungen am Parksperrenkolben führen kann, da in der Regel der Parksperrenkolben aus Aluminium und die Wählscheibe aus Stahl hergestellt sind.

Bei einer nierenförmigen Nut können durch Ausgestaltung der Stärke und Art der Krümmung der Nut (links-seitig oder rechts-seitig) unterschiedliche Funktionalitäten erzielt werden, da die nierenförmige Nut eine Art Kurvenbahn darstellt, auf die der Stift verfährt. Beispielsweise kann die nierenförmige Nut derart ausgeführt sein, dass sie zu einer axialen Wegverlängerung des Sperrelementes und zu einem schnellen Auslegen der Parksperre führt oder dass der Parksperrenkolben in seinen beiden Endlagen - also in den Stellungen "Parksperre eingelegt" und "Parksperre ausgelegt" - keine oder nur sehr geringe Querkräfte erfährt.

Gemäß einer Weiterbildung der Erfindung ist das Einlegefederelement als Druckfeder ausgeführt, die axial betrachtet die Kolbenstange des Parksperrenkolbens ganz oder teilweise konzentrisch umschließt. Durch diese Ausgestaltung wird die Lagerbasis der Klinkenbolzenlagerung zur Abstützung des Klinkenbolzens verkleinert, wodurch die Kraftübertragung in das Getriebegehäuse optimiert ist. Ferner weist das als Druckfeder ausgeführte Einlegefederelement weniger Reibverluste als eine Schenkelfeder auf; zudem können mittels einer Druckfeder höhere Aktuierungskräfte realisiert werden.

Hierbei kann die Druckfeder auf Hülsen geführt werden, um die Kolbenstange vor Beschädigungen zu schützen, wobei sich eine Hülse auf der dem Steuergehäuse zugewandten Seite am Steuergehäuse abstützen kann und die andere Hülse auf der dem Steuergehäuse abgewandten Seite durch eine Sprengringsicherung gehalten wird, wobei der Sprengring in vorteilhafter Weise durch diese Hülse radial gegen Austreten gesichert ist.

Alternativ kann die Sicherung der Druckfeder auf der dem Steuergehäuse abgewandten Seite durch eine Mutter oder durch einen Stift oder durch ein oder mehrere Maschinenelemente erfolgen. Ferner kann die auf der dem Steuergehäuse zugewandten Seite vorgesehene Hülse entfallen, indem im Steuergehäuse eine in Richtung der Kolbenstangen-Mittelachse verlaufende gestufte Axialbohrung oder eine um die Kolbenstangen-Mittelachse umlaufende kreisrunde Nut vorgesehen ist; das dem Steuergehäuse zugewandte Ende der Druckfeder liegt dabei in dieser gestuften Bohrung oder in dieser Nut und wird von der Lauffläche des Parksperrenkolbens ferngehalten.

Im Rahmen einer anderen Weiterbildung der Erfindung ist das Einlegefederelement als Schenkelfeder ausgeführt, deren Windungen um den Klinkenbolzen angeordnet sind.

Als eine alternative Ausführung des Parksperrenaktuator wird ein elektrischer Stellantrieb vorgeschlagen, der mit der Wählscheibe wirkverbunden ist. Ein derartiger elektrischer Stellantrieb kann beispielsweise einen Elektromotor und einen von diesem Elektromotor antreibbaren, auf die Wählscheibe wirkenden Spindeltrieb umfassen. Es ist vorteilhaft, einen solchen Spindeltrieb als selbsthemmendes Getriebe auszuführen, sodass auf eine separate Vorrichtung zum Sichern bzw. Halten der Wählscheibe in einer ihrer Endlagen oder in beiden ihrer Endlagen verzichtet werden kann.

Ferner kann die Wählscheibe zwei Schenkel aufweisen, die jeweils eine kreisrunde Bohrung aufweisen, wobei die Bohrungen koaxial zueinander angeordnet sind und der Lagerung der Wählscheibe auf dem Klinkenbolzen dienen, wobei die Sperrklinke zwischen den beiden Schenkeln gelagert ist. Durch diese Ausgestaltung werden in vorteilhafter Weise Reibeinflüsse minimiert.

Bei den aus dem Stand der Technik bekannten Parksperrenmechanismen wird die Sperrklinke in der Regel durch ein Federelement, beispielsweise durch eine Schenkelfeder oder eine Druckfeder bei ausgelegter Parksperre niedergehalten; durch das Niederhalten der Sperrklinke wird ein Klinkenschwingen und folglich ein Ratschen der Sperrklinke am Parksperrenrad verhindert. Dies resultiert in nachteiliger Weise darin, dass das Einlegefederelement und das Federelement, mittels dessen das Sperrelement auf der Verbindungsstange angefedert ist, größer dimensioniert werden müssen, da sie das Federelement zum Niederhalten überdrücken müssen, was zu einem hohen Bauraumbedarf führt. Ferner ist nach dem Stand der Technik das Federelement zum Niederhalten an dem Klinkenbolzen abgestützt, wodurch die Lagerbasis der Klinkenbolzenlagerung zur Abstützung des Klinkenbolzens vergleichsweise groß dimensioniert sein muss, um die Klinkenkräfte sicher abstützen zu können, was den Bauraumbedarf weiter in nachteiliger Weise erhöht.

Daher wird in einer weiteren Weiterbildung der Erfindung vorgeschlagen, zur Niederhalterung der Sperrklinke im ausgelegten Zustand einen Anschlag der Sperrklinke an der Wählscheibe vorzusehen. Dadurch, dass die Notwendigkeit eines Federelementes zur Niederhalterung der Sperrklinke entfällt, können das Einlegefederelement und das Federelement, mittels dessen das Sperrelement auf der Verbindungsstange angefedert ist, kleiner dimensioniert werden, um Bauraum zu gewinnen. Ferner kann die Lagerbasis der Klinkenbolzenlagerung zur Abstützung des Klinkenbolzens kleiner dimensioniert werden und näher zur Sperrklinke rücken, wodurch die Abstützung der Sperrklinke optimiert wird. Im ausgelegten Zustand der Parksperre verhindert der Anschlag, dass die Sperrklinke das Parksperrenrad berührt, wodurch ein Ratschen der Sperrklinke verhindert wird.

Der Anschlag an der Wählscheibe kann durch eine Aussparung, eine Verstemmung, durch einen Haken oder eine Nase oder durch angeschraubte Maschinenelemente etc. erfolgen, wohingegen die Anschlagsfläche der Klinke durch eine Nase oder einen Haken, durch angeschraubte Maschinenelemente, durch Quetschungen, Verstemmungen etc. erfolgen kann.

In einer konstruktiven Ausgestaltung eines derartigen Anschlags wird vorgeschlagen, als Anschlag der Wählscheibe eine Anschlagsfläche vorzusehen, die mit einer korrespondierenden Anschlagsfläche der Sperrklinke derart zusammenwirkt, dass im ausgelegten Zustand der Parksperre zwischen diesen beiden Anschlagsflächen kein Spalt verbleibt.

In einer vorteilhaften Alternative hierzu wird vorgeschlagen, als Anschlag der Wählscheibe eine Anschlagsfläche vorzusehen, die mit einer korrespondierenden Anschlagsfläche der Sperrklinke derart zusammenwirkt, dass im ausgelegten Zustand der Parksperre zwischen diesen beiden Anschlagsflächen ein Spalt verbleibt. Durch diese konstruktive Ausgestaltung lassen sich Toleranzen der beteiligten Bauteile in einfacher Weise ausgleichen.

In einer Weiterbildung hierzu wird vorgeschlagen, an einer der beiden Anschlagsflächen oder auch an beiden Anschlagsflächen ein Federelement anzuordnen, welches derart ausgelegt ist, dass es das Einlegefederelement beim Einlegen der Parksperre unterstützt oder ersetzt.

In einer anderen vorteilhaften Ausgestaltung der Erfindung wird vorgeschlagen, dass zum Niederhalten der Sperrklinke im ausgelegten Zustand der Parksperre ein Federelement vorgesehen ist, welches im ausgelegten Zustand der Parksperre ein Berühren der Sperrklinke an dem Parksperrenrad verhindert.

In einer Weiterbildung hierzu wird vorgeschlagen, dieses Federelement derart ausgelegt ist, dass es das Einlegefederelement beim Einlegen der Parksperre unterstützt oder ersetzt.

Insbesondere kann ein solches Federelement an der Wählscheibe derart vorgespannt sein, dass ein freies Ende dieses Federelementes nur dann mit der Sperrklinke kraftschlüssig in Kontakt kommt, wenn die Wählscheibe ausgehend von ihrer Stellung im eingelegten Zustand der Parksperre um einen vordefinierten Winkel in Richtung ihrer Stellung im ausgelegten Zustand der Parksperre verdreht wird, sodass dann, wenn das freie Ende des Federelementes kraftschlüssig auf die Sperrklinke wirkt, die auf die Sperrklinke wirkende Kraft des Federelementes einen Kontakt zwischen Sperrklinke und Parksperrenrad verhindert. Alternativ hierzu kann das Federelement an der Wählscheibe derart vorgespannt sein, dass das freie Ende des Federelementes bereits mit der Sperrklinke kraftschlüssig in Kontakt ist, wenn sich Wählscheibe in ihrer Stellung im eingelegten Zustand der Parksperre befindet, sodass dann, wenn die Wählscheibe ausgehend von ihrer Stellung im eingelegten Zustand der Parksperre in Richtung ihrer Stellung im ausgelegten Zustand der Parksperre verdreht wird, sich die auf die Sperrklinke wirkende Kraft des Federelementes derart erhöht, dass ein Kontakt zwischen Sperrklinke und Parksperrenrad sicher verhindert wird. Es stehen also verschiedene Möglichkeiten zur Verfügung, um den Kraftverlauf an der Sperrklinke bei ihrer Schwenkbewegung gezielt zu beeinflussen.

In einer besonders vorteilhaften Weiterbildung der Erfindung wird vorgeschlagen, dass die Sperrklinke der Parksperre sowohl im statisch eingelegten Zustand der Parksperre als auch im statisch ausgelegten Zustand der Parksperre kraftschlüssig an dem Sperrelement der Parksperre anliegt. Hierzu sind an der Sperrklinke zwei Funktionsflächen vorgesehen, von denen die erste Funktionsfläche in bekannter Weise im eingelegten Zustand der Parksperre das Sperrelement zwischen Sperrklinke und Führungsplatte eingeklemmt, wohingegen die zweite Funktionsfläche im ausgelegten Zustand der Parksperre an einer korrespondierenden Fläche des Sperrelementes anliegt. Durch diese konstruktive Ausbildung von Sperrklinke und Sperrelement wird wirkungsvoll vermieden, dass die Sperrklinke durch dynamische Effekte beim Auslegen der Parksperre und im ausgelegten Zustand der Parksperre auf andere Elemente des Parksperrenmechanismus wie z.B. die Verbindungsstange aufschlagen kann.

Die Erfindung wird im Folgenden anhand der beigefügten Figuren beispielhaft näher erläutert. Darin zeigen:
- Fig. 1A: ein erstes Ausgestaltungsbeispiel einer erfindungsgemäßen Parksperre in Schaltstellung "Parksperre eingelegt" in schematischer Darstellung;
- Fig. 1B: die Parksperre gemäß Fig. 1A in Schaltstellung "Parksperre ausgelegt";
- Fig. 1C: die Parksperre gemäß Fig. 1A in perspektivischer Darstellung;
- Fig. 1D: die Parksperre gemäß Fig. 1A mit einem als elektrischer Stellantrieb ausgebildetem Parksperrenaktuator;
- Fig. 2A: ein zweites Ausgestaltungsbeispiel einer erfindungsgemäßen Parksperre in Schaltstellung "Parksperre eingelegt" in schematischer Darstellung;
- Fig. 2B: die Parksperre gemäß Fig. 2A in Schaltstellung "Parksperre ausgelegt";
- Fig. 2C: die Parksperre gemäß Fig. 2A in perspektivischer Darstellung;
- Fig. 2D: ein Konstruktionsdiagramm zur Veranschaulichung der Auslegung des Aktuierungsbereichs der Wählscheibe gemäß Fig. 2A/2B/2C;
- Fig. 3: eine erste Konstruktionsvariante des Mitnehmers gemäß Fig. 2A/2B/2C in schematischer Darstellung;
- Fig. 4: eine zweite Konstruktionsvariante des Mitnehmers gemäß Fig. 2A/2B/2C in schematischer Darstellung;
- Fig. 5: eine dritte Konstruktionsvariante des Mitnehmers gemäß Fig. 2A/2B/2C in schematischer Darstellung;
- Fig. 6: eine vierte Konstruktionsvariante des Mitnehmers gemäß Fig. 2A/2B/2C in schematischer Darstellung;
- Fig. 7: eine schematische Ansicht eines Teils des Parksperrenzylinders zur Veranschaulichung von Einführfasen an der Aussparung zur Aufnahme des Mitnehmers gemäß Fig. 3 bis 6;
- Fig. 8: ein drittes Ausgestaltungsbeispiel einer erfindungsgemäßen Parksperre in schematischer Darstellung;
- Fig. 9: eine schematische Ansicht des ersten Schrittes zur Montage von Wählscheibe und Parksperrenzylinder;
- Fig. 10: eine schematische Ansicht des zweiten Schrittes zur Montage von Wählscheibe und Parksperrenzylinder;
- Fig. 11:: eine schematische Ansicht des dritten Schrittes zur Montage von Wählscheibe und Parksperrenzylinder;
- Fig. 12A: ein viertes Ausgestaltungsbeispiel einer erfindungsgemäßen Parksperre in Schaltstellung "Parksperre eingelegt" in schematischer Darstellung;
- Fig. 12B: die Parksperre gemäß Fig. 12A in Schaltstellung "Parksperre ausgelegt";
- Fig. 13:: eine schematische Schnittansicht einer möglichen konstruktiven Ausbildung der Abstützung der Druckfeder bei der Parksperre gemäß Fig. 12A/12B;
- Fig. 14A, Fig. 14B und Fig. 14C: verschiedene Ansichten unterschiedlicher Ausgestaltungen der Wählscheibe;
- Fig. 15: eine perspektivische Ansicht einer Wählscheibe umfassend eine Anschlagsfläche für die Sperrklinke;
- Fig. 16: eine Ansicht einer Sperrklinke umfassend eine Anschlagsfläche zur Wirkverbindung mit der Anschlagsfläche der Wählscheibe;
- Fig. 17A: eine schematische Teilansicht der Wählscheibe gemäß Fig. 15 und der Sperrklinke gemäß Fig. 16 zur Veranschaulichung der Funktionsweise des Niederhaltens der Sperrklinke im ausgelegten Zustand der Parksperre;
- Fig.17B: eine zweite schematische Teilansicht der Sperrklinke gemäß Fig. 16 zur Veranschaulichung der Funktionsweise des Niederhaltens der Sperrklinke im ausgelegten Zustand der Parksperre;
- Fig. 18, Fig. 19, Fig. 20 und Fig. 21: Prinzipdarstellungen unterschiedlicher Ausgestaltungen des Anschlags der Sperrklinke an der Wählscheibe;
- Fig. 22: Ansichten einer gemäß einer Ausgestaltung der Erfindung als Einlegefederelement dienenden Blattfeder;
- Fig. 23: eine schematische Ansicht einer erfindungsgemäßen Parksperre umfassend ein Einlegefederelement gemäß Fig. 22;
- Fig. 24: einen sektionalen Schnitt der Parksperre gemäß Fig. 23;
- Fig. 25: eine schematische Ansicht einer erfindungsgemäßen Parksperre, bei dem als Einlegefederelement zumindest zwei parallel zueinander angeordnete Druckfedern vorgesehen sind;
- Fig. 26: einen sektionalen Schnitt der Parksperre gemäß Fig. 25;
- Fig. 27: eine schematische Detailansicht und eine schematische Schnittansicht eines Einlegefederelementes gemäß Fig. 25;
- Fig. 28A: ein Ausgestaltungsbeispiel einer erfindungsgemäßen Parksperre umfassend einen Anschlag gemäß Fig. 20, in schematischer Darstellung in Schaltstellung "Parksperre eingelegt";
- Fig. 28B: die Parksperre gemäß Fig. 28A in Schaltstellung "Parksperre ausgelegt";
- Fig. 28C: die Parksperre gemäß Fig. 28A in perspektivischer Darstellung;
- Fig. 28D: ein Kraftdiagramm für ein zum Niederhalten der Sperrklinke in Schaltstellung "Parksperre ausgelegt" vorgesehenes Federelement, welches nur in Schaltstellung "Parksperre ausgelegt" wirkt;
- Fig. 28E: ein Kraftdiagramm für ein zum Niederhalten der Sperrklinke in Schaltstellung "Parksperre ausgelegt" vorgesehenes Federelement, welches sowohl in Schaltstellung "Parksperre eingelegt" als auch in Schaltstellung "Parksperre ausgelegt" wirkt;
- Fig. 29: ein fünftes Ausgestaltungsbeispiel einer erfindungsgemäßen Parksperre in Schaltstellung "Parksperre ausgelegt" in schematischer Darstellung; und
- Fig. 30: ein sechstes Ausgestaltungsbeispiel einer erfindungsgemäßen Parksperre in Schaltstellung "Parksperre ausgelegt" in schematischer Darstellung.

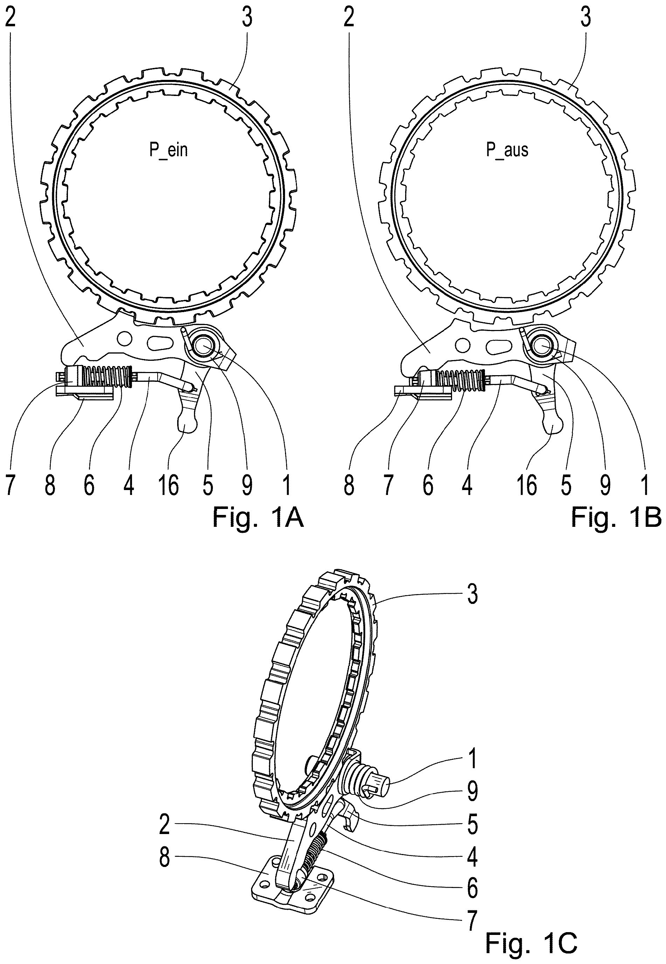

Die in den **Figuren 1A, 1B und 1C** gezeigte Parksperre umfasst eine auf einem Klinkenbolzen 1 schwenkbar gelagerte Sperrklinke 2, die in ein mit dem Abtrieb des Getriebes verbundenes Parksperrenrad 3 ein- oder ausrastet und ein auf einer Verbindungsstange 4 zu einer Wählscheibe 5 angeordnetes, über ein Federelement 6 angefedertes und als Sperrkegel ausgeführtes Sperrelement 7, welches im gesperrten Zustand zwischen der Sperrklinke 2 und einer Führungsplatte 8 eingeklemmt ist, um ein Herausdrücken der Sperrklinke aus einer Zahnlücke des Parksperrenrades 3 zu verhindern.

**Figur 1A** zeigt diese Parksperre in Schaltstellung "Parksperre eingelegt", gekennzeichnet durch das Bezugszeichen P_ein. **Figur 1B** hingegen zeigt diese Parksperre in Schaltstellung "Parksperre ausgelegt", gekennzeichnet durch das Bezugszeichen P_aus. **Figur 1C** schließlich zeigt diese Parksperre in dreidimensionaler Darstellung.

Das dem Sperrelement 7 abgewandte Ende der Verbindungsstange 4 ist an der Wählscheibe 5 angelenkt, welche mit einem hier nicht dargestellten Parksperrenaktuator wirkverbunden ist, der die Wählscheibe 5 gegen die Kraft eines Einlegefederelementes 9 zum Auslegen der Parksperre betätigt. Zur Aufnahme der vom Parksperrenaktuator beim Auslegen der Parksperre ausgeübten Kraft dient dabei eine Mitnehmer 16 der Wählscheibe 5. Das Einlegen der Parksperre erfolgt durch die Kraft des Einlegefederelementes 9. Gemäß der Erfindung ist die Verbindungsstange 4 unterhalb der Sperrklinke 2, parallel zur Sperrklinke 2 und senkrecht zum Klinkenbolzen 1 angeordnet, wobei die Wählscheibe 5 auf dem Klinkenbolzen 1 drehbar gelagert ist.

Bei dem in den Figuren 1A, 1B, 1C gezeigten ersten Ausführungsbeispiel einer erfindungsgemäßen Parksperre ist das Einlegefederelement 9 als Schenkelfeder ausgeführt, deren Windungen um den Klinkenbolzen 1 angeordnet sind. Ferner ist bei dem gezeigten Beispiel zwischen der Wählscheibe 5 und der Sperrklinke 2 eine Anlaufscheibe angeordnet.

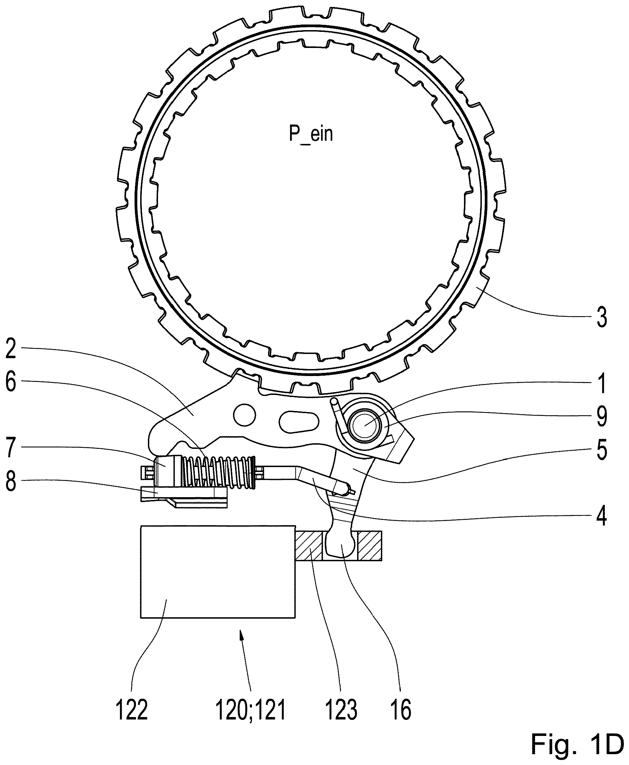

Auswahl und konstruktive Ausbildung des zum Auslegen der Parksperre benötigten Parksperrenaktuators sind in weiten Grenzen variierbar. Als ein Beispiel hierzu zeigt **Figur 1D** die in den Figuren 1A, 1B, 1C dargestellte Parksperre mit einem zum Auslegen der Parksperre vorgesehenen Parksperrenaktuator 120, der als ein elektrischer Stellantrieb 121 ausgebildet ist, hier beispielhaft umfassend einen Elektromotor 122 und einen Spindeltrieb 123, wobei dieser vom Elektromotor 122 antreibbare Spindeltrieb 123 auf einen Mitnehmer 16 der Wählscheibe 5 wirkt. In vorteilhafter Weise kann ein solcher Spindeltrieb als selbsthemmendes Getriebe ausgeführt sein, sodass auf eine separate Vorrichtung zum Sichern bzw. Halten der Wählscheibe 5 in einer ihrer Endlagen oder in beiden ihrer Endlagen verzichtet werden kann.

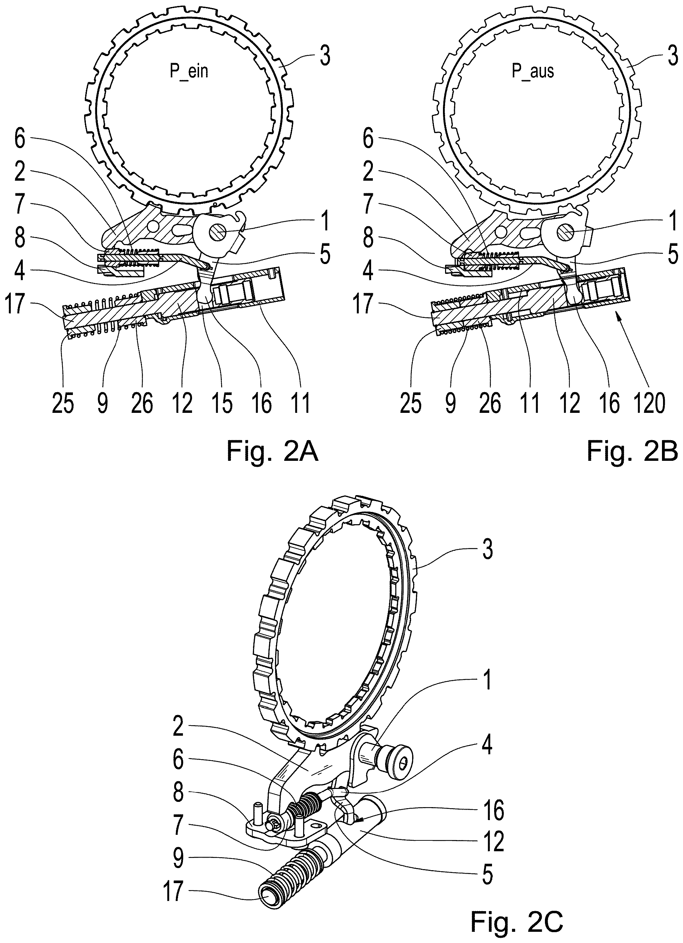

Im Rahmen eines in den **Figuren 2A, 2B und 2C** dargestellten zweiten Ausführungsbeispiel einer erfindungsgemäßen Parksperre ist zum Auslegen der Parksperre ein Parksperrenaktuator 120 vorgesehen, der mit der Wählscheibe 5 in Wirkverbindung steht. Hierbei weist der Parksperrenaktuator 120 einen hydraulisch betätigbaren Parksperrenkolben 12 auf, der axial verschiebbar in einem Steuergehäuse 11 angeordnet ist und eine Kolbenstange 17 aufweist, die kraftschlüssig auf einen Mitnehmer 16 der Wählscheibe 5 wirkt. Dabei ist das Einlegefederelement 9 als Druckfeder ausgeführt, die axial betrachtet die Kolbenstange 17 des Parksperrenkolbens 12 ganz oder teilweise konzentrisch umschließt. **Figur 2A** zeigt diesen Parksperrenmechanismus in Schaltstellung "Parksperre eingelegt" (gekennzeichnet durch das Bezugszeichen P_ein), wohingegen **Figur 2B** diesen Parksperrenmechanismus in Schaltstellung "Parksperre ausgelegt" (gekennzeichnet durch das Bezugszeichen P_aus) zeigt. **Figur 2C** zeigt diesen Parksperrenmechanismus in dreidimensionaler Darstellung.

Räumlich gesehen ist dieser Parksperrenkolben 12 unterhalb der Verbindungsstange 4 und im Wesentlichen parallel zur Verbindungsstange 4 angeordnet. In den Figuren 2A und 2B ist der Druckraum des Parksperrenkolbens 12 mit dem Bezugszeichen 13 bezeichnet, wobei eine Rastierung für den Parksperrenkolben 12 mit 14 bezeichnet ist. In Figur 2C ist zur Vereinfachung der dreidimensionalen Darstellung das Steuergehäuse nicht abgebildet.

Hierbei ist der Klinkenbolzen 1 unter dem Parksperrenrad 3 angeordnet; ferner weisen das Steuergehäuse 11 und der Parksperrenkolben 12 eine Aussparung oder einen Schlitz 15 auf, durch die ein mit der Wählscheibe 5 drehfest verbundener oder mit der Wählscheibe 5 einstückig ausgeführter Mitnehmer 16 geführt ist, um zwischen der Wählscheibe 5 und dem Parksperrenkolben 12 eine Wirkverbindung herzustellen. Die Kolbenstange des Parksperrenkolbens 12 ist mit dem Bezugszeichen 17 versehen. Räumlich gesehen befindet sich die Aktuierung der Parksperre in diesem Ausführungsbeispiel also unterhalb von Verbindungsstange 5 und Sperrklinke 2, was in vorteilhafter Weise eine sehr kompakte Bauform ermöglicht.

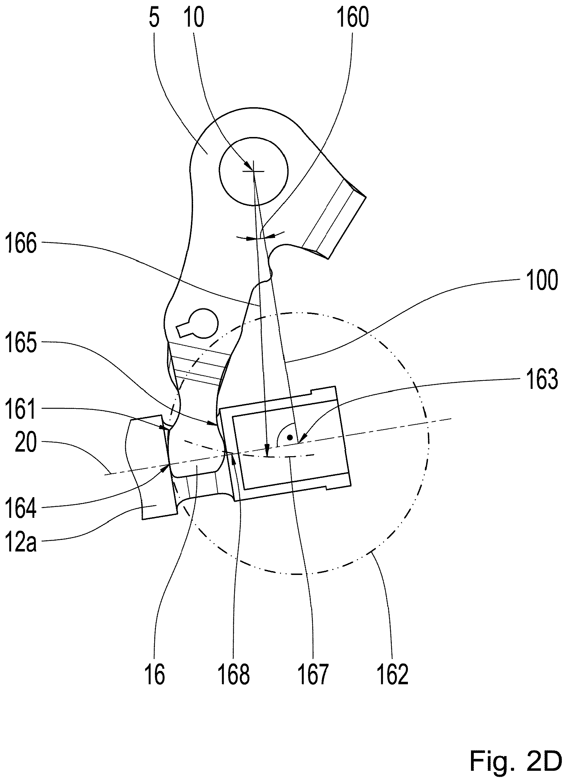

Die in den Figuren 1A, 1B, 1C, 2A, 2B und 2C vorgesehene geometrische Ausbildung des Mitnehmers 16 der Wählscheibe 5 ist identisch und basiert auf folgenden Überlegungen, die anhand von **Figur 2D** näher erläutert wird:
Für die konstruktive Auslegung der mit 161 bezeichneten Kontur des Mitnehmers 16, die beim Auslegen der Parksperre die Wirkverbindung zum Parksperrenkolben 12 darstellt, ist die mit 100 bezeichnete Senkrechte zur Parksperrenkolben-Längsachse 20 wesentlich, die die Wählscheiben-Drehachse 10 schneidet. Der Schnittpunkt zwischen dieser Senkrechten 100 und der Parksperrenkolben-Längsachse 20 definiert den Mittelpunkt 163 eines den Parksperrenkolben 12 berührenden Kreises 162.

Es ist besonders vorteilhaft, die Kontur 161 des Mitnehmers 16, welche beim Auslegen der Parksperre die Wirkverbindung zum Parkperrenkolben 12 darstellt, derart zu gestalten, dass für jeden im Betriebsbereich möglichen Schaltwinkel 160 der Wählscheibe 5 um ihre Wählscheiben-Drehachse 10 alle Berührpunkte 164, in denen die Kontur 161 des Mitnehmers 16 den Parksperrenkolben 12 je nach Schaltwinkel 160 berührt, auf dem genannten Kreis 162 liegen. In diesem Fall setzt sich die beim Auslegen der Parksperre die Wirkverbindung zum Parksperrenkolben 12 bildende (und der Senkrechten 100 abgewandten) Kontur 161 des Mitnehmers 16 sich aus vielen sehr kleinen Kreissegmenten unterschiedlichen Durchmessers zusammen, mit dem Ergebnis, dass der Berührpunkt 164, in dem die Kontur 161 des Mitnehmers 16 den Parksperrenkolben 12 berührt, stets auf der Parksperrenkolben-Längsachse 20 liegt und damit der auf den Parksperrenkolben 12 beim Auslegen der Parksperre wirksame Hebelarm der Wählscheibe 5 stets konstant bleibt.

In ihrer einfachsten Ausführung ist die Kontur 161 nur für einen speziellen Schaltwinkel optimiert, sodass die Kontur 161 dann nur durch ein Kreissegment mit konstantem Durchmesser gebildet wird, mit der Folge, dass zumindest einer ihrer Berührpunkte 164 auf der Parksperrenkolben-Längsachse 20 liegt.

Für die konstruktive Auslegung der mit 165 bezeichneten Kontur des Mitnehmers 16, die beim Einlegen der Parksperre die Wirkverbindung zum Parksperrenkolben 12 darstellt, ist hingegen der mit 166 bezeichnete Radius um die Wählscheiben-Drehachse 10 wesentlich, der die Parksperrenkolben-Längsachse 20 schneidet. Der durch diesen Radius 166 definierte Kreis ist mit 167 bezeichnet.

Es ist besonders vorteilhaft, die Kontur 165 des Mitnehmers 16, welche beim Einlegen der Parksperre die Wirkverbindung zum Parkperrenkolben 12 darstellt, derart zu gestalten, dass für jeden im Betriebsbereich möglichen Schaltwinkel 160 der Wählscheibe 5 um ihre Wählscheiben-Drehachse 10 die Berührpunkte 168, in denen die Kontur 165 des Mitnehmers 16 den Parksperrenkolben 12 je nach Schaltwinkel 160 berühren, alle auf dem genannten Kreis 167 liegen. In diesem Fall findet beim Einlegen der Parksperre am Kontaktpunkt zwischen Mitnehmer 16 und Parksperrenkolben 12 keine Relativbewegung statt, da die betroffenen Abschnitte von Mitnehmer 16 und Parksperrenkolben 12 aufeinander abrollen.

Im Ergebnis sind die beim Auslegung und Einlegen der Parksperre wirksamen Eingriffsflanken der Wählscheibe 5, also die Konturen 161 und 165 des Mitnehmers 16, geometrisch verschieden gestaltet.

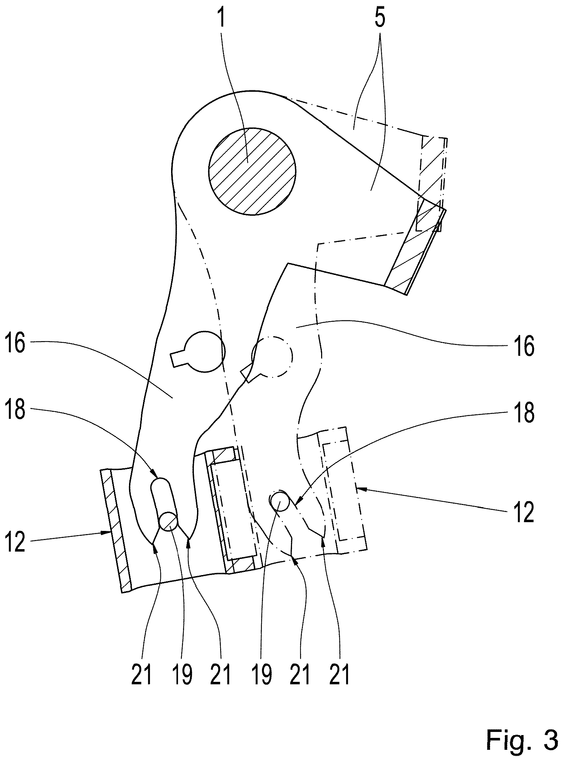

Im Folgenden werden anhand der **Figuren 3 bis 6** vier vorteilhafte alternative Konstruktionsvarianten des in den Figuren 2A, 2B und 2C vorgesehenen Mitnehmers 16 näher erläutert.

Bezugnehmend auf **Figur 3****,** weist der Mitnehmer 16 gemäß der ersten Konstruktionsvariante im Aktuierungsbereich eine Nut 18 auf, welche in einen mit dem Parksperrenkolben 12 verbundenen Stift 19 greift, wobei die Nut 18 als gerader Schlitz ausgeführt ist und der Stift 19 senkrecht zu der Parksperrenkolbenlängsachse 20 angeordnet ist. Die in **Figur 3** in durchgezogener Linie dargestellten Bauteile zeigen diese Bauteile - insbesondere die Wählscheibe 5 mit dem Mitnehmer 16 und der Parksperrenkolben 12 mit dem Stift 19 - in Schaltstellung "Parksperre eingelegt", wohingegen die in Figur 3 in strichpunktierter Linie dargestellten Bauteile diese Bauteile in Schaltstellung "Parksperre ausgelegt" zeigen.

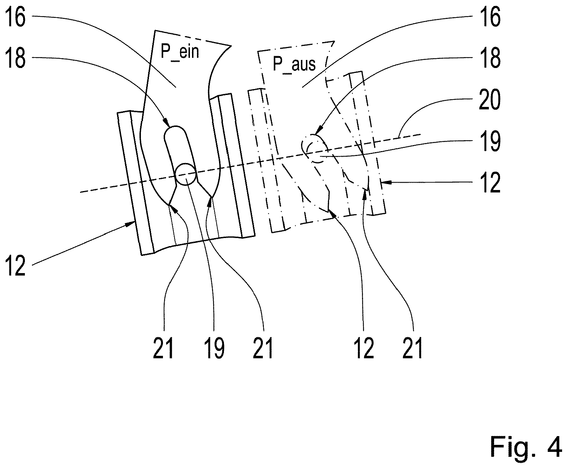

Durch eine andere konstruktive Ausgestaltung der Nut 18 des Mitnehmers 16 der Wählscheibe 5 lassen sich weitere Vorteile erzielen. Ist die Nut 18 des Mitnehmers 16 der Wählscheibe 5 beispielsweise nierenförmig ausgebildet, können durch eine entsprechende Ausgestaltung der Stärke und Art der Krümmung der Nierenform unterschiedliche Funktionalitäten erzielt werden, da die jetzt nierenförmige Nut 18 eine Art Kurvenbahn darstellt, auf die der Stift 19 verfährt. Beispielsweise kann die nierenförmige Nut derart ausgeführt sein, dass sie zu einer axialen Wegverlängerung des Sperrelementes bei gleichem Weg des Parksperrenkolbens 12 und somit zu einem schnellen Auslegen der Parksperre führt. Eine derartige Ausgestaltung ist anhand **Figur 4** veranschaulicht, wobei P_ein die Stellung des Mitnehmers 16 bei eingelegter Parksperre und P_aus die Stellung des Mitnehmers 16 bei ausgelegter Parksperre bezeichnen. Die Krümmung der Nut 18 verläuft hierbei vom Ende des Mitnehmers 16 aus betrachtet in Richtung der axialen Verschiebung des Parksperrenkolbens 12 beim Einlegen der Parksperre. Beim Auslegen der Parksperre wirkt die vom Mitnehmer 16 entgegenwirkende Kraftsenkrecht zur Kolbenlängsachse 20.

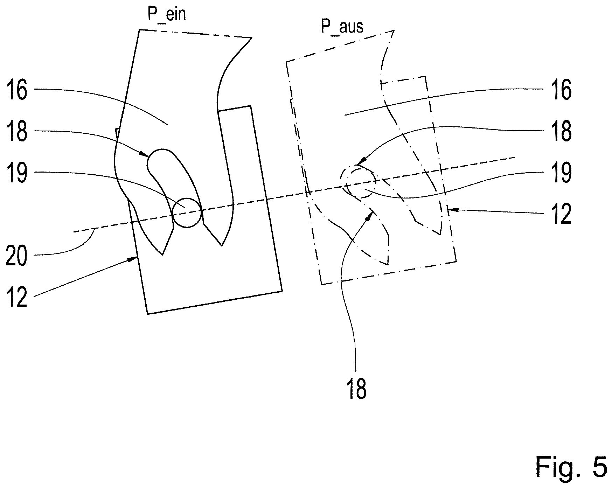

Bei dem Ausführungsbeispiel gemäß **Figur 5** ist die Krümmung der nierenförmigen Nut 18 stärker als beim Ausführungsbeispiel gemäß Figur 4, so dass die axiale Wegverlängerung des Sperrelementes bei gleichem Weg des Parksperrenkolbens 12 größer ist, wodurch die Parksperre schneller ausgelegt werden kann. Je stärker die Krümmung der nierenförmigen Nut 18, desto höher ist hierbei die auf den Parksperrenkolben 12 wirkende Querkraft.

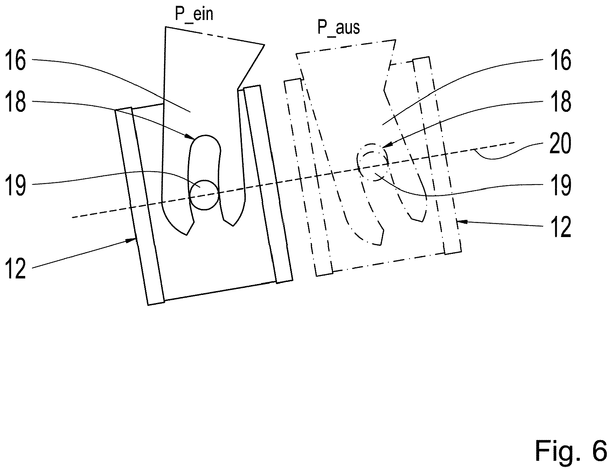

Gegenstand der **Figur 6** ist ein Ausführungsbeispiel, bei dem die nierenförmige Nut 18 eine Krümmung aufweist, die vom Ende des Mitnehmers 16 aus betrachtet in Richtung der axialen Verschiebung des Parksperrenkolbens 12 beim Auslegen der Parksperre verläuft. Auf diese Weise wird gewährleistet, dass der Parksperrenkolben 12 in den beiden Endlagen, d.h. bei eingelegter und ausgelegter Parksperre keine Querkräfte erfährt.

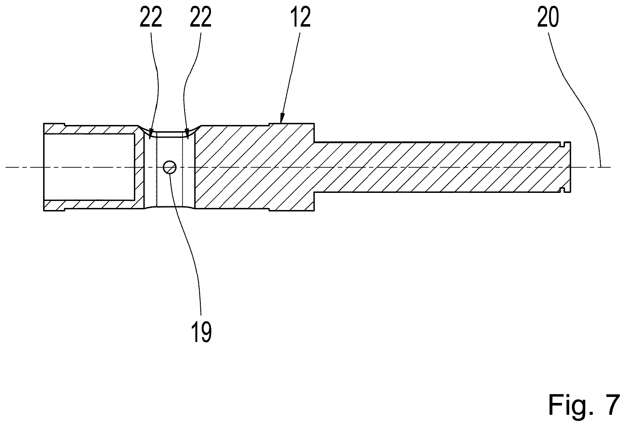

Das dem Parksperrenkolben 12 zugewandte Ende des Mitnehmers weist vorzugsweise Einführfasen auf, die in Figuren 4, 5 und 6 mit dem Bezugszeichen 21 versehen sind, um das Einführen des Mitnehmers und das Finden des Stiftes 19 zu erleichtern; der Parksperrenkolben 12 kann im Bereich der Aussparung 15 ebenfalls Einführphasen 22 aufweisen, um das Einführen des Mitnehmers 16 zu erleichtern, wie anhand **Figur 7** veranschaulicht.

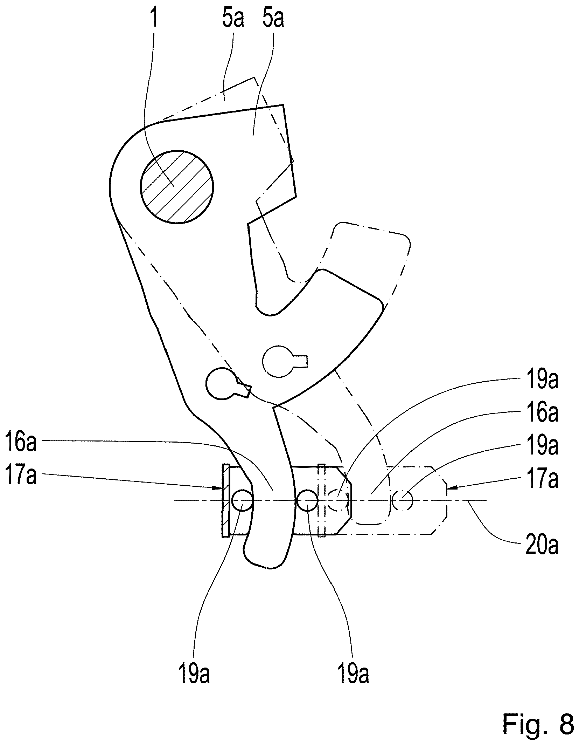

Anhand von **Figur 8** wird nachfolgend ein drittes Ausgestaltungsbeispiel einer erfindungsgemäßen Parksperre näher erläutert. Im Wesentlichen handelt es sich hierbei um eine Variante der konstruktiven Ausbildung des Mitnehmers der Wählscheibe im Aktuierungsbereich dieses Mitnehmers. Figur 8 zeigt eine schematische Darstellung dieser Wählscheibe und ihre Wirkverbindung zu dem hydraulisch betätigbaren Parksperrenkolben der Parksperre. Dabei zeigen die in Figur 8 in durchgezogener Linie dargestellten Bauteile diese Bauteile in Schaltstellung "Parksperre eingelegt", wohingegen die in Figur 8 in strichpunktierter Linie dargestellten Bauteile diese Bauteile in Schaltstellung "Parksperre ausgelegt" zeigen. Zur besseren Unterscheidung gegenüber dem zuvor beschriebenen Design ist in Figur 8 die Wählscheibe nunmehr mit 5a bezeichnet, der Mitnehmer dieser Wählscheibe 5a nunmehr mit 16a, die Kolbenstange der Parksperrenkolbens nunmehr mit 17a und die Parksperrenkolben-Längsachse nunmehr mit 20a. Der von der Kolbenstange 17a betätigbare Mitnehmer 16a der Wählscheibe 5a ist nunmehr fingerförmig ausgebildet und greift in einen durch zwei kolbenstangenfeste Stifte 19a begrenzten Abschnitt der Kolbenstange 17a ein. Die beiden im Wesentlichen senkrecht zur ParksperrenkolbenLängsachse 20a achsparallel zum Klinkenbolzen 1 in die Kolbenstange 17a eingesetzten Stifte 19a führen den Mitnehmer 16a bei einer Axialbewegung der Kolbenstange 17a, sodass der Axialhub der Kolbenstange 17a in einen Drehwinkel der Wählscheibe 5a umgesetzt wird.

Dabei ist der Mitnehmen 16a im Aktuierungsbereich derart gekrümmt, dass die Kraftübertragung in jeder Stellung der Wählscheibe 5a - also auch beim Verdrehen der Wählscheibe 5a von Stellung "Parksperre eingelegt" in Stellung "Parksperre ausgelegt" und umgekehrt - in Richtung der ParksperrenkolbenLängsachse 20a wirkt. Hierdurch wird in besonders vorteilhafter Weise vermieden, dass über die parksperrenkolbenfeste Kolbenstange 17a auf den Parksperrenkolben Querkräfte ausgeübt werden, die zu einer Schwergängigkeit des Parksperrenkolbens in seiner Steuergehäusebohrung oder sogar zu einem Verklemmen des Parksperrenkolbens in seiner Steuergehäusebohrung führen könnten.

Nachfolgend werden Montageaspekte der Erfindung näher erläutert.

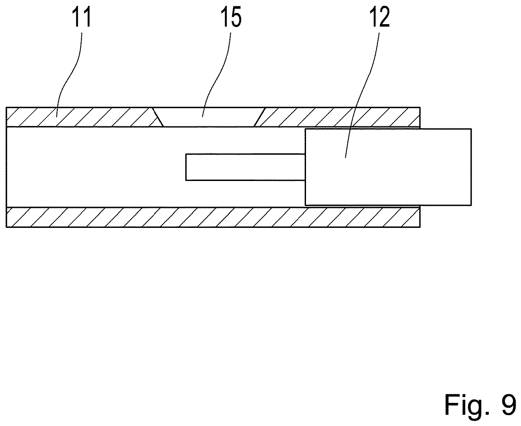

Eine vorteilhafte Möglichkeit der Montage des Mitnehmers 16 der Wählscheibe 5 in den Parksperrenkolben 12 für den Fall, dass das Einlegefederelement 9 gemäß einer Weiterbildung der Erfindung als Druckfeder ausgeführt ist, welche axial betrachtet die Kolbenstange 17 des Parksperrenkolbens 12 ganz oder teilweise konzentrisch umschließt, ist anhand **Figuren 9****,** **10** **und** **11** veranschaulicht.

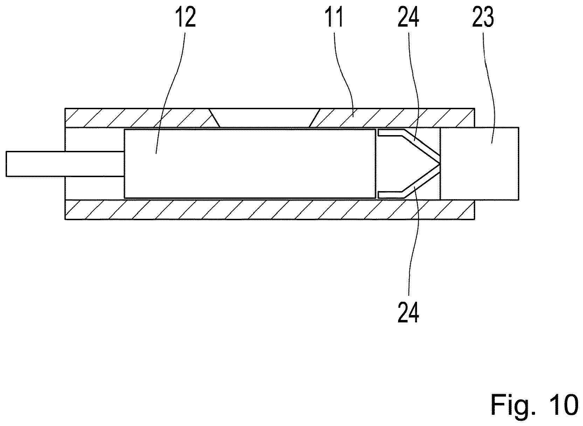

In einem ersten Schritt und bezugnehmend auf **Figur 9** wird der Parksperrenkolben 12 in eine geeignete Kolbenbohrung des Steuergehäuses 11 in Pfeilrichtung geschoben. Anschließend wird, wie anhand **Figur 10** veranschaulicht, in diese Kolbenbohrung eine elektrisch betätigbare Rastiereinheit 23 eingeschoben, mittels derer der Parksperrenkolben 12 in seinen beiden Endstellungen "Parksperre eingelegt" und "Parksperre ausgelegt" gehalten werden kann. Wesentlich ist, dass erst dann, wenn die Rastiereinheit 23 bestromt ist, der Parksperrenkolben 12 in seine Stellung "Parksperre eingelegt" geschoben werden kann. In dem hier gezeigten Ausführungsbeispiel sind Rastelemente der Rastiereinheit 23 als Rastierhaken 24 ausgebildet, die im unbestromten Zustand auseinanderstehen und sich erst durch eine Bestromung derart zusammen ziehen, dass der Parksperrenkolben 12 axial verfahren kann.

Anschließend wird die Druckfeder 9 auf die Kolbenstange 17 montiert.

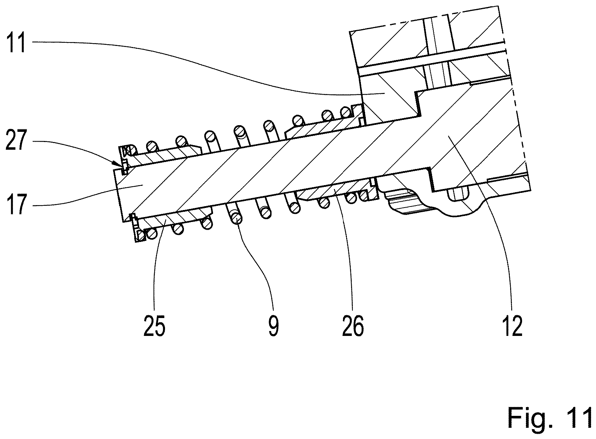

Bei dem gezeigten Beispiel ist-wie anhand **Figur 11** veranschaulicht - die Druckfeder 9 auf Hülsen 25, 26 geführt, um die Kolbenstange 17 vor Beschädigungen zu schützen, wobei sich die auf der dem hydraulischen Steuergerät 11 zugewandten Seite der Druckfeder 9 vorgesehene Hülse 26 am Steuergehäuse 11 abstützt und die andere, auf der dem Steuergehäuse 11 abgewandten Seite der Druckfeder 9 vorgesehene Hülse 25 durch eine Sprengringsicherung 27 gehalten wird. Der Sprengring ist in vorteilhafter Weise durch die Hülse 25 radial gegen Austreten gesichert.

Anschließend wird das Steuergehäuse 11 an ein hier nicht näher detailliertes elektrohydraulisches Getriebesteuergerät oder direkt an ein hier nicht näher dargestelltes Getriebegehäuse angeschraubt. Hierbei befindet sich der Parksperrenkolben 12 in seiner Stellung "Parksperre eingelegt", wohingegen sich die Wählscheibe 5 in ihrer "Parksperre ausgelegt" Stellung befindet, da keine Kraft vorherrscht, welche das Federelement 6, mittels dessen das Sperrelement 7 auf der Verbindungsstange 4 angefedert ist, überdrückt. Zur weiteren Montage wird die Rastiereinheit 23 bestromt und die Druckfeder 9 auf der Kolbenstange 17 soweit überdrückt, dass die Kolbenstange 17 ihre Stellung "Parksperre ausgelegt" erreicht, wobei dann, wenn der Parksperrenkolben 12 sein Stellung "Parksperre ausgelegt" erreicht, die Bestromung der Rastiereinheit 23 unterbrochen wird, sodass die Rastiereinheit 23 in dann in ihre Stellung "Parksperre ausgelegt" einfällt.

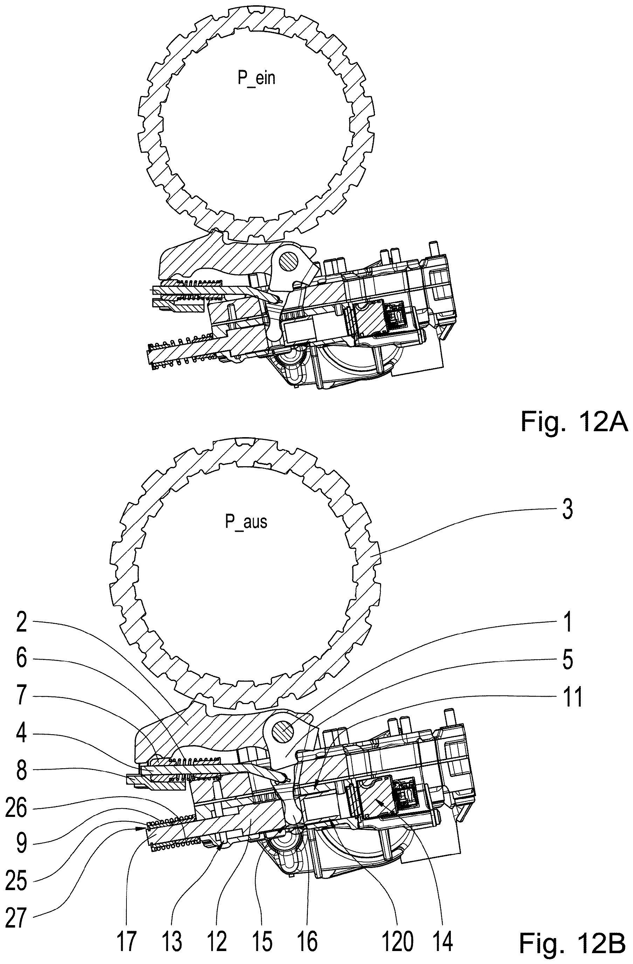

Auf diese Weise sind der Mitnehmer 16 der Wählscheibe 5 und die Aussparung 15 des Parksperrenkolbens 12 in Stellung "Parksperre ausgelegt" übereinander angeordnet, so dass mittels eines geeigneten Werkzeugs der Mitnehmer 16 gezielt auf den Stift 19 geführt werden kann. Das hier vorgestellte Montageverfahren weist zum einen den Vorteil auf, dass die Wählscheibe 5 nicht mehr per Hand überdrückt werden muss; zum anderen kann das Fahrzeug geschoben werden, ohne weitere Maßnahmen einzuleiten, da die Parksperre ausgelegt ist. Der Zustand nach der beschriebenen Montage ist Gegenstand der **Figuren 12A und 12B****,** in der ein viertes Ausgestaltungsbeispiel einer erfindungsgemäßen Parksperre dargestellt ist. **Figur 12A** zeigt den Parksperrenmechanismus bei eingelegter Parksperre (Bezugszeichen P_ein), **Figur 12B** bei ausgelegter Parksperre (Bezugszeichen P_aus).

Durch die Ausgestaltung des Einlegefederelementes 9 als Druckfeder, welche axial betrachtet die Kolbenstange 17 des Parksperrenkolbens 12 ganz oder teilweise konzentrisch umschließt, wird die Lagerbasis der Klinkenbolzenlagerung zur Abstützung des Klinkenbolzens 1 verkleinert, wodurch die Kraftübertragung in das Getriebegehäuse optimiert ist. Ein weiterer Vorteil besteht darin, dass eine Druckfeder weniger Reibverluste als eine Schenkelfeder aufweist; zudem können mittels einer Druckfeder höhere Aktuierungskräfte realisiert werden.

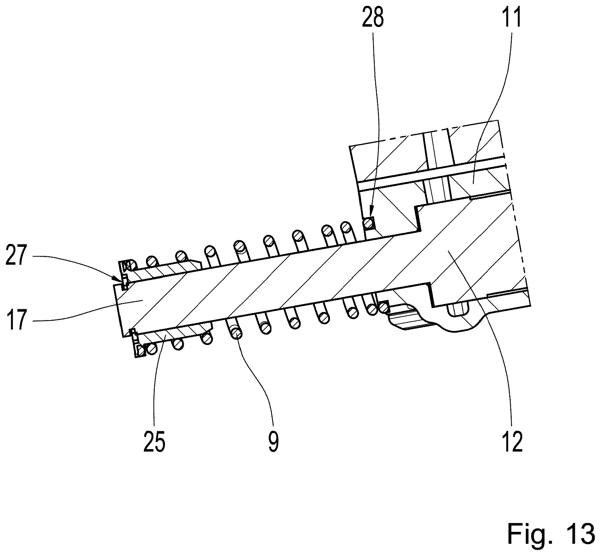

Die Sicherung der Druckfeder auf der dem hydraulischen Steuergerät abgewandten Seite kann auch durch eine Mutter oder durch einen Stift oder durch ein oder mehrere Maschinenelemente erfolgen. Ferner kann die in Figur 12 auf der dem Steuergehäuse 11 zugewandten Seite der Druckfeder 9 vorgesehene Hülse entfallen, wobei dann am Steuergehäuse 11 eine um die Kolbenstangen-Mittelachse umlaufende kreisrunde Nut 28 vorgesehen ist, in dem das dem Steuergehäuse 11 zugewandte Ende der Druckfeder 9 liegt und dadurch von der Lauffläche der Kolbenstange 17 fern gehalten wird. Das dem Steuergehäuse 11 abgewandte Ende der Druckfeder 9 ist dabei analog zur der in Figur 12 dargestellten Ausgestaltung auf einer Hülse 25 geführt, welche durch eine Sprengringsicherung 27 gehalten wird, wobei der Sprengring durch die Hülse 25 radial gegen Austreten gesichert ist. Diese vorteilhafte erfindungsgemäße Ausgestaltung ist Gegenstand der **Figur 13****.**

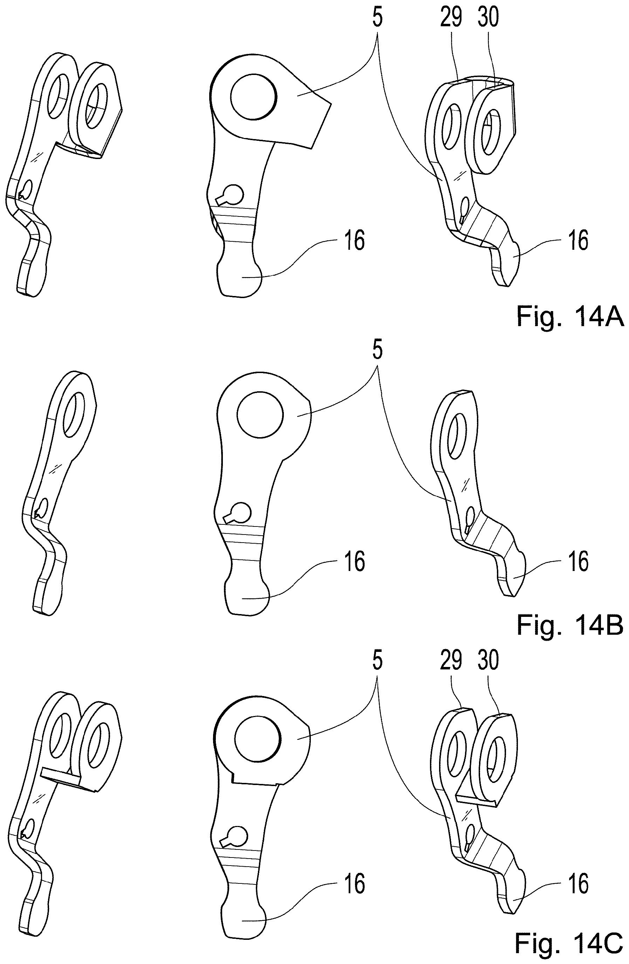

Nachfolgend werden anhand der **Figuren 14A bis 14C** beispielhafte Ausgestaltungen der auf dem Klinkenbolzen gelagerten Wählscheibe 5 näher erläutert. Wie in **Figur 14A** und **Figur 14C** gezeigt, kann die Wählscheibe 5 zwei Schenkel 29, 30 aufweisen, die jeweils eine kreisrunde Bohrung aufweisen, wobei die Bohrungen koaxial zueinander angeordnet sind und der Lagerung der Wählscheibe 5 auf dem (hier nicht eingezeichneten) Klinkenbolzen dienen, wobei die (hier ebenfalls nicht eingezeichnete) Sperrklinke zwischen den beiden Schenkeln gelagert ist. Wie in **Figur 14B** gezeigt, kann die Wählscheibe 5 aber auch lediglich eine kreisrunde Bohrung aufweisen, welche der Lagerung der Wählscheibe 5 auf dem (hier nicht eingezeichneten) Klinkenbolzen dient.

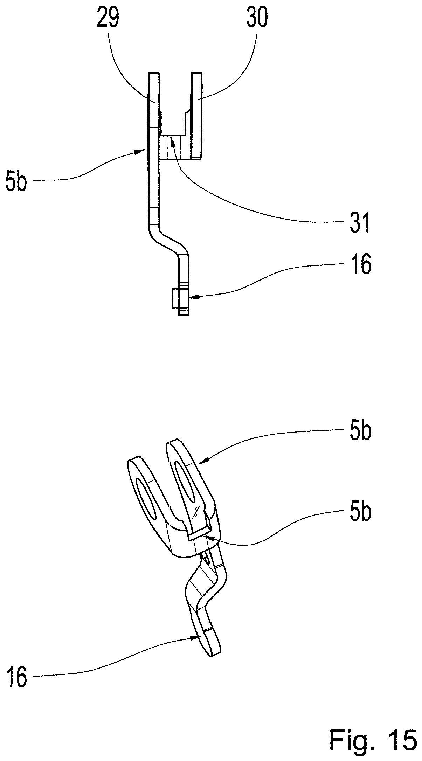

Gemäß einer vorteilhaften Weiterbildung der Erfindung und bezugnehmend auf die **Figuren 15****,** **16****,** **17A** **und** **17B** wird vorgeschlagen, zum Niederhalten der jetzt mit Bezugszeichen 2a beschrifteten Sperrklinke im ausgelegten Zustand der Parksperre einen Anschlag der Sperrklinke 2a an der jetzt mit Bezugszeichen 5b beschrifteten Wählscheibe vorzusehen, welcher im ausgelegten Zustand der Parksperre verhindert, dass die Sperrklinke 2a das (in den Figuren nicht näher dargestellten) Parksperrenrad berührt, wodurch ein Ratschen der Sperrklinke 2a verhindert wird.

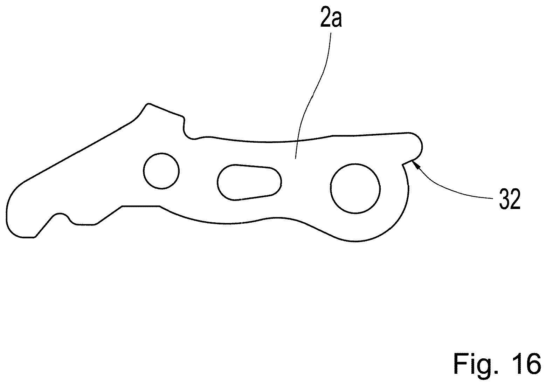

Der Anschlag an der Wählscheibe 5b kann beispielsweise durch eine Aussparung, eine Verstemmung, durch einen Haken oder eine Nase oder durch angeschraubte Maschinenelemente etc. erfolgen. Der korrespondierende Anschlag an der Sperrklinke 2 kann durch eine Nase oder einen Haken, durch angeschraubte Maschinenelemente, durch Quetschungen, Verstemmungen etc. erfolgen. Als Ausführungsbeispiel für einen Anschlag zeigt **Figur 15** eine Wählscheibe 5b mit einer als Aussparung ausgebildeten Anschlagfläche 31, **Figur 16** eine Sperrklinke 2a mit einer zur Anschlagfläche 31 korrespondierenden Anschlagfläche 32 an einer an die Sperrklinke 2a angeformten Nase. Ähnlich wie bei den in **Figur 14A** und **Figur 14C** gezeigten Konstruktionen weist auch die Wählscheibe 5b zwei Schenkel 29, 30 mit jeweils einer kreisrunde Bohrung auf, wobei diese Bohrungen koaxial zueinander angeordnet sind und der Lagerung der Wählscheibe 5b auf dem (hier nicht eingezeichneten) Klinkenbolzen dienen, wobei die (hier ebenfalls nicht eingezeichnete) Sperrklinke zwischen diesen beiden Schenkeln 29, 30 gelagert ist. In Richtung der Klinkenbolzen-Längsachse gesehen befindet sich die Anschlagfläche 31 achsparallel zur Klinkenbolzen-Längsachse in einem Bereich axial zwischen den beiden Schenkeln 29, 30.

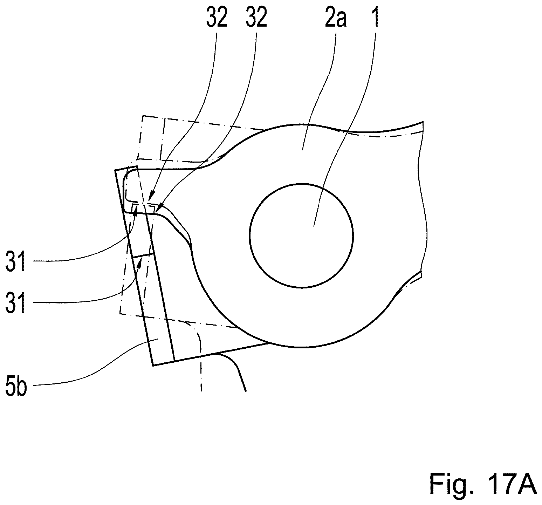

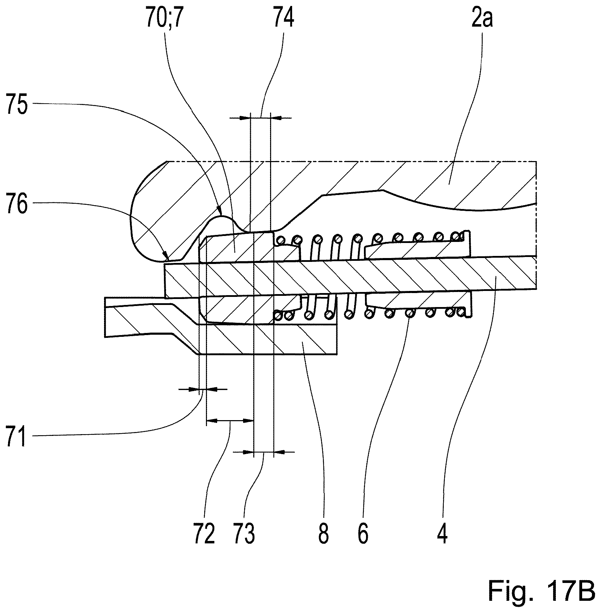

Das Funktionsprinzip der beschriebenen Ausgestaltung der Sperrklinke 2a und der Wählscheibe 5b zum Niederhalten der Sperrklinke 2 der Parksperre im ausgelegten Zustand (P_aus) wird anhand der Figuren 17A und 17B veranschaulicht. **Figur 17A** zeigt denjenigen Abschnitt der Sperrklinke 2a in vergrößerter Darstellung zeigt, an dem die Anschlagfläche 32 angeordnet ist. Dabei zeigen die in Figur 17A in durchgezogener Linie dargestellten Bauteile diese Bauteile in Schaltstellung "Parksperre eingelegt", wohingegen die in Figur 17A in strichpunktierter Linie dargestellten Bauteile diese Bauteile in Schaltstellung "Parksperre ausgelegt" zeigen. Bei ausgelegter Parksperre kann die Sperrklinke 2a das Parksperrenrad nicht erreichen, da die Anschlagsfläche 32 der auf dem Klinkenbolzen 1 drehbar gelagerten Sperrklinke 2a an die korrespondierende Anschlagsfläche 31 der ebenfalls auf dem Klinkenbolzen 1 drehbar gelagerten Wählscheibe 5b anstößt.

**Figur 17B** zeigt in vergrößerter Darstellung denjenigen Abschnitt der Sperrklinke 2a, an dem das Sperrelement 7 an der Sperrklinke 2a anliegt, wobei sich die Sperrklinke 2a hier in ihrer Schaltstellung "Parksperre ausgelegt" (P_aus) befindet. In dem in Figur 17B dargestellten Ausführungsbeispiel ist das Sperrelement 7 in bekannter Weise als Sperrkegel 70 ausgebildet, der-wie üblich - in drei Segmente unterteilt ist, nämlich in eine Anhebeschräge 71, einen mit einer Sperrschräge versehenen Sperrbereich 72, sowie einen zylindrischen Führungsbereich 73. Die Aufschlagkontur 74 der Sperrklinke 2a ist derart gestaltet, dass im gesamten Hubbereich des Sperrkegels 70, in der sich der Sperrkegel 70 nicht in seiner Sperrstellung - also nicht in seiner Schaltstellung "Parksperre eingelegt" - befindet, die Schwenkbewegung der Sperrklinke 2a nach unten durch den zylindrischen Führungsbereich 73 des Sperrkegels 70 begrenzt wird. Dadurch ist sichergestellt, dass die Sperrklinke 2a im gesamten Hubbereich, in der sich der Sperrkegel 70 nicht in seiner Sperrstellung befindet, nicht auf die Anhebeschräge 71, nicht auf den Sperrbereich 72 und auch nicht auf die Verbindungsstange 4 aufschlägt, was in Figur 17B anhand des kritischen Sperrklinkenabschnitts 75 nahe dem Sperrbereich 72 und anhand des kritischen Sperrklinkenabschnitts 76 nahe der Verbindungsstange 4 gut ersichtlich ist. In besonders vorteilhafter Weise werden durch diese konstruktive Ausbildung Beschädigungen, welche die Parksperrenfunktion beeinträchtigen können, zuverlässig verhindert.

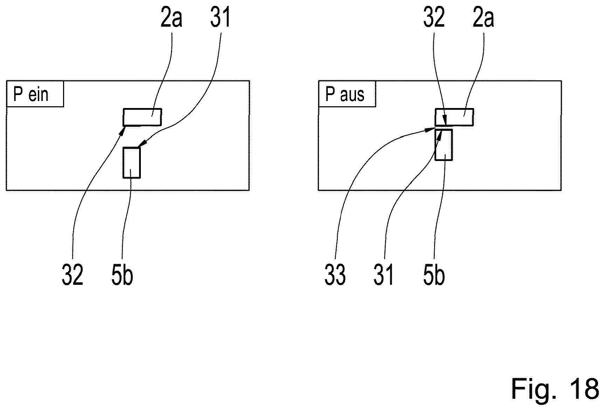

Der Anschlag der Sperrklinke an der Wählscheibe kann hierbei unterschiedlich ausgeführt sein, was nachfolgend anhand der **Figuren 18 bis 21** näher erläutert wird.

Bezugnehmend auf **Figur 18****,** deren linker Teil dem Zustand bei eingelegter Parksperre (P_ein) und deren rechter Teil den Zustand bei ausgelegter Parksperre (P_aus) darstellt, kann im ausgelegten Zustand (P_aus) der Parksperre zwischen der Anschlagsfläche 32 der Sperrklinke 2a und der Anlagefläche 31 der Wählscheibe 5b ein Spalt 33 vorgesehen sein. Wenn die Sperrklinke 2a im ausgelegten Zustand (P_aus) der Parksperre schwingt, stößt die Anschlagsfläche 32 der Sperrklinke 2a gegen die Anschlagsfläche 31 der Wählscheibe 5b, wodurch die Sperrklinke 2a niedergehalten wird.

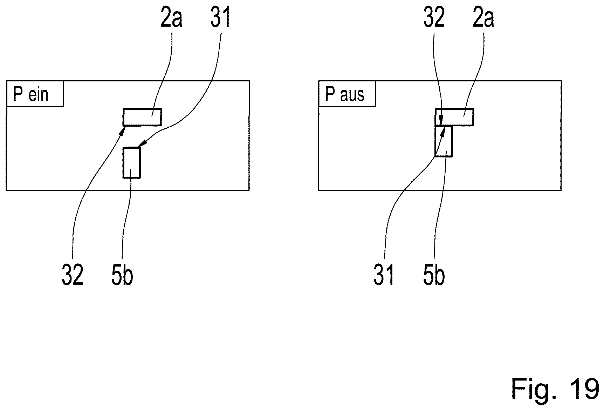

Gegenstand der **Figur 19****,** deren linker Teil dem Zustand bei eingelegter Parksperre (P_ein) und deren rechter Teil den Zustand bei ausgelegter Parksperre (P_aus) darstellt, ist eine Ausgestaltung, bei der zwischen den Anschlagsflächen 31, 32 im ausgelegten Zustand der Parksperre (P_aus) kein Spalt vorgesehen ist, so dass in vorteilhafter Weise ein Schwingen der Sperrklinke 2a verhindert wird. Im Rahmen einer Weiterbildung der Erfindung kann der auf diese Weise realisierte Anschlag auch als Anschlag des Parksperrenzylinders bei ausgelegter Parksperre dienen.

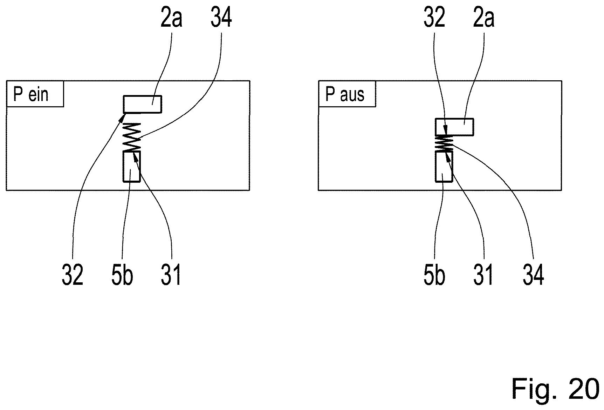

Gemäß einer anderen Ausgestaltung, die Gegenstand der **Figur 20** ist, kann an einer der beiden Anschlagsflächen 31, 32 - also entweder an der Anschlagsfläche 32 der Sperrklinke 2a und an der Anlagefläche 31 der Wählscheibe 5b - ein Federelement 34 angeordnet sein, wodurch Toleranzen ausgeglichen werden können. Hierbei ist im ausgelegten Zustand der Parksperre (P_aus) zwischen diesen Anschlagsflächen 31, 32 ein Spalt 33 vorgesehen; das Federelement 34 kann als Druckfeder, Blattfeder, Drehfeder oder Schenkelfeder ausgeführt sein. Wenn die Sperrklinke 2a im ausgelegten Zustand (P_aus) der Parksperre schwingt, wird die Schwingung durch das Federelement 34 gebremst, wodurch die Sperrklinke niedergehalten wird.

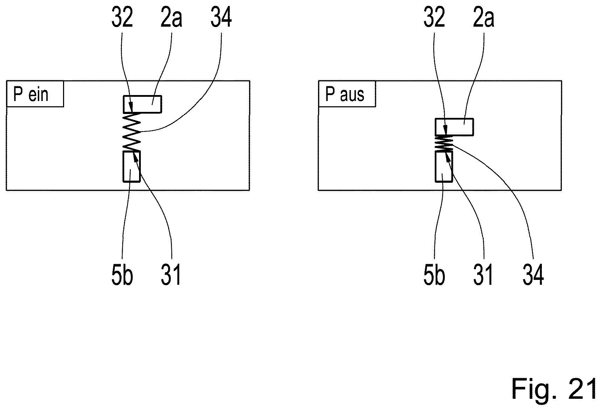

Im Rahmen einer weiteren vorteilhaften Ausgestaltung wird vorgeschlagen, zwischen der Anschlagsfläche 32 der Sperrklinke 2a und der Anlagefläche 31 der Wählscheibe 5b ein Federelement 34 anzuordnen, welches derart ausgelegt sein kann, dass es das Einlegefederelement beim Einlegen der Parksperre unterstützt oder ersetzt. Diese Ausgestaltung ist Gegenstand der **Figur 21****.** Durch das Ersetzen des als Schenkelfeder oder Druckfeder ausgeführten Einlegefederelementes 9 durch das Federelement 34 bleibt der sonstige Aufbau der erfindungsgemäßen Parksperre, wie dieser im Rahmen dieser Beschreibung offenbart ist, unverändert. So ist es beispielsweise möglich, dass bei den Ausgestaltungen gemäß Figur 1, Figur 2 und Figur 12 das Einlegefederelement 9 entfällt, wobei die Niederhalterung der in diesen Figuren mit Bezugszeichen 2 beschrifteten Sperrklinke im ausgelegten Zustand der Parksperre gemäß Figur 21 realisiert wird und das Einlegefederelement 9 durch das Federelement 34 ersetzt wird.

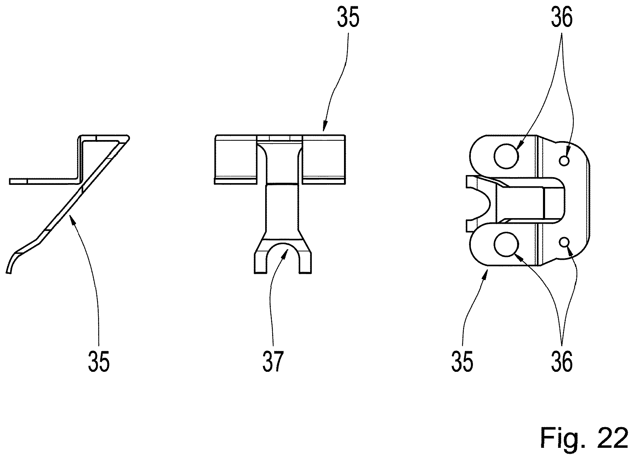

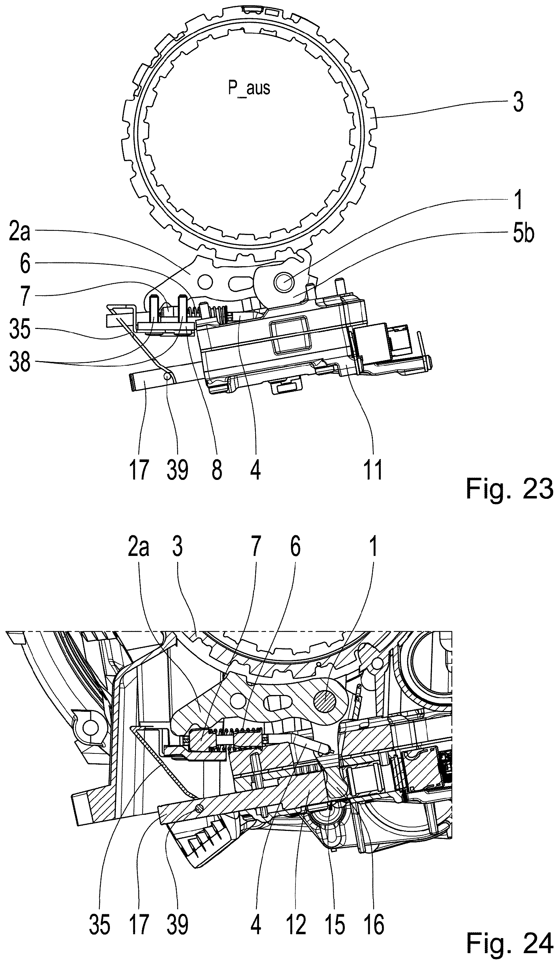

Gemäß einer weiteren Ausgestaltung der Erfindung und bezugnehmend auf **Figur 22****,** **Figur 23** und **Figur 24** ist das Einlegefederelement 9 als Blattfeder 35 ausgeführt, deren eines Ende mittels Schrauben und Verschraubungspunkten 36 in das Getriebe montiert wird. Als Konstruktionsbeispiel einer solchen Blattfeder 35 zeigt Figur 22 verschiedene Ansichten einer besonders bauraumsparenden Ausgestaltung, bei der die Blattfeder 35 an der Führungsplatte 8 mit der Führungsplattenverschraubung 38 montiert werden kann, wie in Figur 23 ersichtlich. Figur 23 zeigt den entsprechenden Parksperrenmechanismus bei ausgelegter Parksperre (Bezugszeichen P_aus). Figur 24 zeigt einen sektionalen Schnitt dieses Parksperrenmechanismus. Das andere Ende der Blattfeder 35 greift im montierten Zustand mit einer gabelförmigen Kontur 37 auf die Kolbenstange 17 des Parksperrenkolbens 12 mittels eines in der Kolbenstange 17 verliersicher gelagerten Stiftes 39.

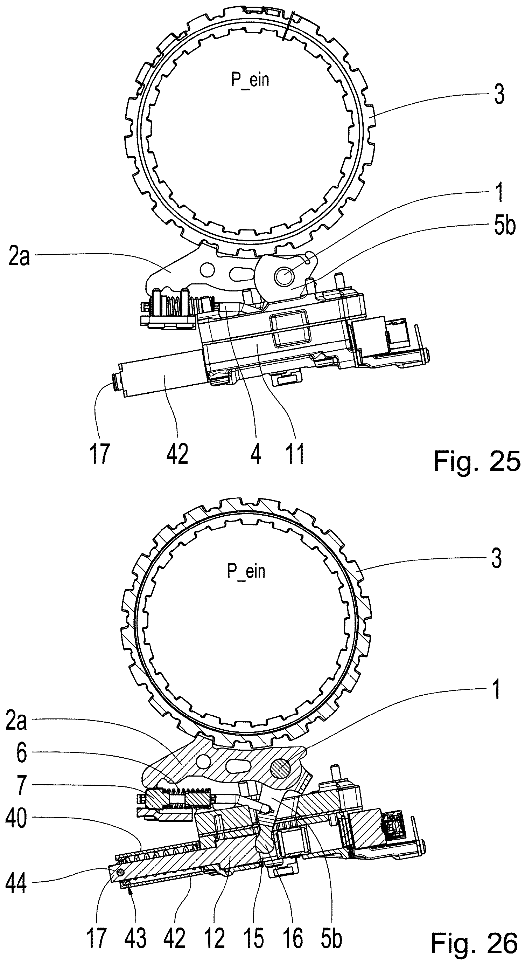

Im Rahmen einer weiteren Ausgestaltung der Erfindung und bezugnehmend auf **Figur 25, Figur 26** und **Figur 27** wird vorgeschlagen, als Einlegefederelement 9 zumindest zwei parallel zueinander angeordnete Druckfedern 40, 41 vorzusehen, welche in einer mit dem Steuergehäuse 11 verbundenen Federführung 42 parallel zur Kolbenstange 17 des Parksperrenkolbens 12 angeordnet sind und in dieser geführt werden. Durch diese Ausgestaltung wird in vorteilhafter Weise die Kraft des Einlegefederelementes bei geringem erforderlichen Bauraum erhöht. Die Kolbenstange 17 ist bei dem gezeigten Beispiel durch die Federführung 42 geführt. Figur 25 zeigt diesen Parksperrenmechanismus bei eingelegter Parksperre (Bezugszeichen P_ein) in schematischer Darstellung, Figur 26 in Schnittdarstellung.

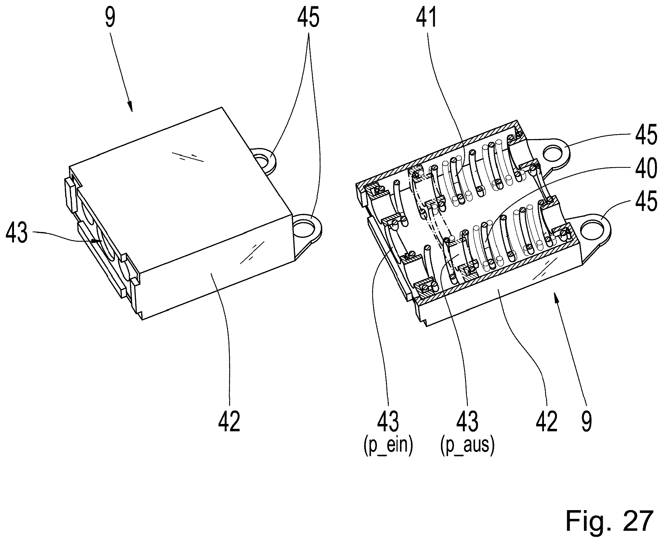

Hierbei wird ein Verfahrweg der zumindest zwei Druckfedern 40, 41 durch einen mit der Kolbenstange 17 des Parksperrenkolbens 12 wirkverbundenen und in der Federführung 42 verschiebbar angeordneten Federführungsschlitten 43 ermöglicht, an dem sich jeweils ein Ende der zumindest zwei Druckfedern 40, 41 abstützt, wobei sich das andere Ende der zumindest zwei Druckfedern 40, 41 an der Federführung 42 abstützt und wobei der Federführungsschlitten 43 durch Anschlagpunkte innerhalb der Federführung 42 verliersicher gelagert ist. Der linke Teil der Figur 27 zeigt eine dreidimensionale schematische Ansicht des in den Figuren 25 und 26 vorgesehenen Einlegeelementes 9, umfassend die Federführung 42, den innerhalb der Federführung 42 angeordneten Federführungsschlitten 43 und die innerhalb der Federführung 42 angeordneten Druckfedern 40 und 41, wobei sich der Federführungsschlitten 43 in seiner Stellung bei eingelegter Parksperre befindet. Die Anschraubpunkte zur Montage der Federführung 42 an das Steuergehäuse 11 sind mit dem Bezugszeichen 45 versehen. Der rechte Teil der Figur 27 zeigt einen Schnitt durch dieses Einlegeelement 9, wobei die in durchgezogener Linie dargestellte Position des Federführungsschlitten 43 seiner Lage bei eingelegter Parksperre (Bezugszeichen P_ein) entspricht, wohingegen die in strichpunktierter Linie dargestellte Position des Federführungsschlitten 43 seiner Lage bei ausgelegter Parksperre (Bezugszeichen P_aus) entspricht.

Wie in Figur 26 ersichtlich, wird die auf den Federführungsschlitten 43 wirkende Federkraft der zumindest zwei Druckfedern 40, 41 mittels eines Maschinenelementes, das bei dem gezeigten Beispiel als in der Kolbenstange 17 des Parksperrenkolbens 12 gelagerter verliersicherer Stift 44 ausgeführt ist, auf die Kolbenstange 17 des Parksperrenkolbens 12 übertragen.

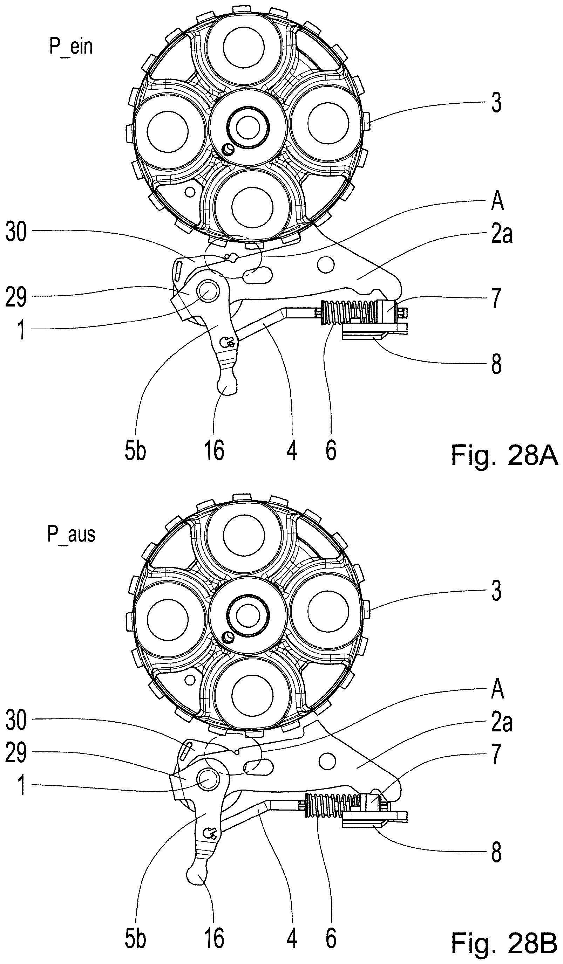

Nachfolgend und bezugnehmend auf die **Figuren 28A bis 28E** wird eine besonders bevorzugte konstruktive Ausgestaltung einer erfindungsgemäßen Parksperre näher beschrieben, bei der zum Niederhalten der Sperrklinke im ausgelegten Zustand der Parksperre an der Wählscheibe einen Anschlag für die Sperrklinke vorgesehen ist, welcher im ausgelegten Zustand der Parksperre ein Berühren der Sperrklinke an dem Parksperrenrad verhindert, als Ausgestaltungsbeispiel eines Anschlags gemäß Figur 20.

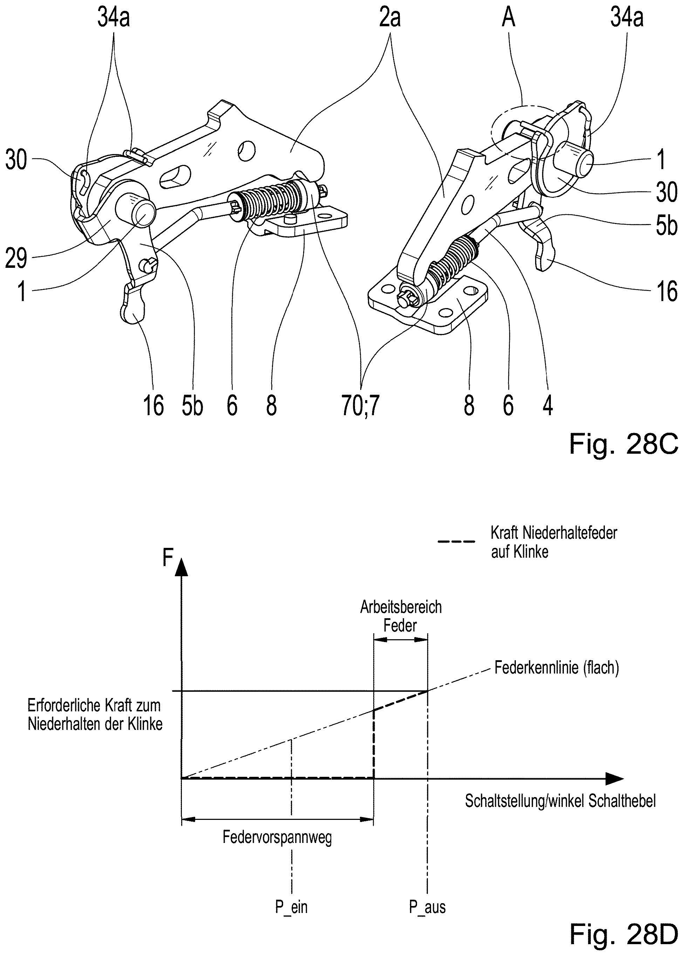

Die in den **Figuren 28A, 28B** **und** **28C** gezeigte Parksperre umfasst wiederum eine auf einem Klinkenbolzen 1 schwenkbar gelagerte Sperrklinke 2a, die in ein Parksperrenrad 3 ein- oder ausrastet und ein auf einer Verbindungsstange 4 zu einer Wählscheibe 5b angeordnetes, über ein Federelement 6 angefedertes und als Sperrkegel 70 ausgeführtes Sperrelement 7, welches im gesperrten Zustand zwischen der Sperrklinke 2a und einer Führungsplatte 8 eingeklemmt ist, um ein Herausdrücken der Sperrklinke 2a aus einer Zahnlücke des Parksperrenrades 3 zu verhindern. Ein Mitnehmer 16 der Wählscheibe 5b ist mit einem hier zur Vereinfachung nicht näher dargestellten hydraulisch betätigbaren Parksperrenkolben wirkverbunden. Wie bereits in Figur 15 vorgeschlagen, weist die Wählscheibe 5b zwei Schenkel 29, 30 mit jeweils einer kreisrunde Bohrung auf, wobei diese Bohrungen koaxial zueinander angeordnet sind und der Lagerung der Wählscheibe 5b auf dem Klinkenbolzen 1 dienen, wobei die Sperrklinke 2a zwischen diesen beiden Schenkeln 29, 30 gelagert ist. Die Anschlagfläche (31) der Wählscheibe 5b und die hierzu korrespondierende Anschlagfläche (32) der Sperrklinke 2a sind in der Darstellung der Figuren 28A bis 28C verdeckt. Das zum Niederhalten der Sperrklinke 2a in Schaltstellung "Parksperre ausgelegt" vorgesehenes Federelement ist mit 34a bezeichnet.

**Figur 28A** zeigt diese Parksperre in Schaltstellung "Parksperre eingelegt", gekennzeichnet durch das Bezugszeichen P_ein. **Figur 28B** zeigt diese Parksperre in Schaltstellung "Parksperre ausgelegt", gekennzeichnet durch das Bezugszeichen P_aus, zeigt. **Figur 28C** schließlich zeigt diese Parksperre in dreidimensionaler Darstellung.

Im ausgelegten Zustand (P_aus) der Parksperre wird die Sperrklinke 2a durch das Federelement 34a, das hier beispielhaft als kostengünstige Biegefeder aus Federdraht ausgebildet ist, niedergehalten. Die Besonderheit dieses Federelementes 34a ist die Art ihrer Abstützung an der Wählscheibe 5b. Das Federelement 34a ist an der Wählscheibe 5b derart vorgespannt, dass ein freies Ende des Federelementes 34a - hier das dem Sperrkegel 70 zugewandte abgekröpfte Ende der Biegefeder, in den Figuren 28A, 28B, 28C als Detail A markiert - nur dann mit der Sperrklinke 2a kraftschlüssig in Kontakt kommt, wenn die Wählscheibe 5b ausgehend von ihrer Stellung im eingelegten Zustand (P_ein) der Parksperre um einen vordefinierten Winkel in Richtung ihrer Stellung im ausgelegten Zustand (P_aus) der Parksperre verdreht wird. Erst dann, wenn das freie Ende des Federelementes 34a kraftschlüssig auf die Sperrklinke 2a wirkt, verhindert die auf die Sperrklinke 2a wirkende Kraft des Federelementes 34a einen Kontakt zwischen Sperrklinke 2a und Parksperrenrad 3.

Somit ist die Wirksamkeit der Biegefeder 34a lediglich bei ausgelegter Parksperre möglich, ohne dass die Biegefeder 34a die Sperrklinke 2a bei eingelegter Parksperre niederhält. Wenn sich die Wählscheibe 5b in ihre P_ein-Stellung dreht, gibt die Biegefeder 34a die Sperrklinke 2a frei und die Biegefeder 34a dreht sich mit bzw. mittels der Wählscheibe 5b weg von ihrem Anschlagpunkt auf der Sperrklinke 2a, sodass der Klinkenzahn der Sperrklinke 2a jetzt ohne Gegenkraft der Biegefeder 34a in eine Zahnlücke des Parksperrenrades 3 einfallen kann.

Dadurch, dass sich die Biegefeder 34a an der Wählscheibe 5b abstützt, ist die Wählscheibe 5b geometrisch so gestaltbar, dass die Wählscheibe 5b für die Biegefeder 34a zwei Einhänge-Ausnehmungen aufweist, in denen die Biegefeder 34a in vorteilhafter Weise verliersicher montiert wird. Ein weiterer wesentlicher Vorteil einer derartigen Ausgestaltung ist, dass die Lage dieser beiden Einhänge-Ausnehmungen relativ zueinander einen weiten Auslegungsspielraum für die effektiv auf die Sperrklinke 2a wirkende Kraft der Biegefeder 34a eröffnet. So ist der Arbeitsbereich der Biegefeder 34a trotz kleinem Drehwinkel der Wählscheibe 5b in weiten Grenzen auf die jeweilige Anwendung anpassbar. Auch ermöglicht diese Art der Vorspannung der Biegefeder 34a an der Wählscheibe 5b eine flache Federkennlinie, mit dem Vorteil einer hohen Niederhaltekraft bei wenig Sperrklinkenhub. Zur Verdeutlichung dieses Sachverhaltes zeigt **Figur 28D** ein selbsterklärendes Diagramm mit einem beispielhaften Kraftverlauf für ein zum Niederhalten der Sperrklinke 2a in Schaltstellung "Parksperre ausgelegt" vorgesehenes Federelement 34a, welches nur in Schaltstellung "Parksperre ausgelegt" wirkt.

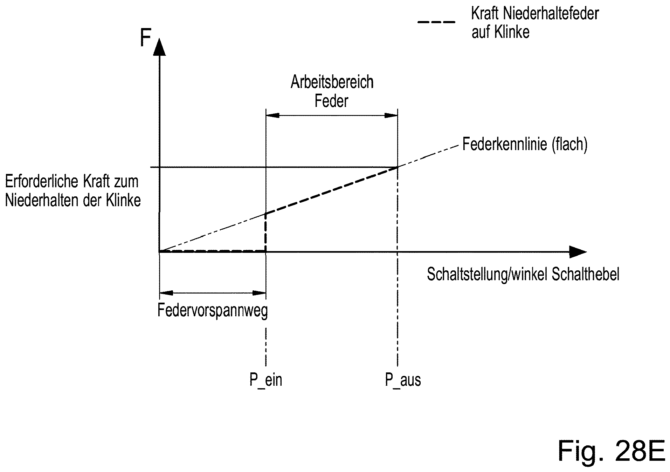

Alternativ zu dem anhand der Figuren 28A, 28B, 28C und 28E beschriebenen Ausführungsbeispiel einer erfindungsgemäßen Parksperre kann auch vorgesehen sein, die Vorspannung des Federelementes 34a an der Wählscheibe 5b konstruktiv derart auszuführen, dass ein freies Ende des Federelementes 34a bereits mit der Sperrklinke 2a kraftschlüssig in Kontakt ist, wenn sich Wählscheibe 5b in ihrer Stellung im eingelegten Zustand (P_ein) der Parksperre befindet, wobei dann, wenn die Wählscheibe 5b ausgehend von ihrer Stellung im eingelegten Zustand (P_ein) der Parksperre in Richtung ihrer Stellung im ausgelegten Zustand (P_aus) der Parksperre verdreht wird, sich die auf die Sperrklinke 2a wirkende Kraft des Federelementes 34a derart erhöht, dass ein Kontakt zwischen Sperrklinke 2a und Parksperrenrad 3 sicher verhindert wird. **Figur 28E** zeigt ein selbsterklärendes Diagramm mit einem beispielhaften Kraftverlauf für ein solches zum Niederhalten der Sperrklinke 2a in Schaltstellung "Parksperre ausgelegt" vorgesehenes Federelement 34a, das sowohl in Schaltstellung "Parksperre eingelegt" als auch in Schaltstellung "Parksperre ausgelegt" wirkt.

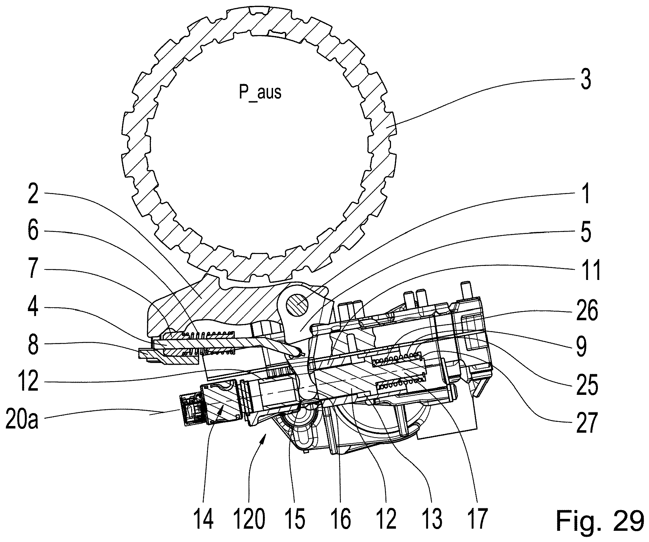

Zurückkommend auf die insbesondere in den Figuren 2A, 2B, 2C und 12A, 12B, 12C dargestellten Ausgestaltungsbeispiele, bei denen die zum situativen mechanischen Festsetzen des Parksperrenkolbens 12 vorgesehene elektromagnetisch betätigbare Rastiereinrichtung 14 stets auf derjenigen Seite des Parksperrenkolbens 14 angeordnet ist, die dem von dem Aktuatorkolben 12 betätigten Sperrelement 7 abgewandt ist, sei an dieser Stelle auf den beispielhaften Charakter dieser räumlichen Anordnung der Rastiereinrichtung 14 hingewiesen. Bei Bedarf wird der Fachmann auch eine andere räumliche Anordnung der Rastiereinrichtung 14 vorsehen. Als eine Beispiel für eine solche Alternative ist in **Figur 29** ein fünftes Ausgestaltungsbeispiel einer erfindungsgemäßen Parksperre dargestellt, welches aus dem in den Figuren 12A, 12B, 12C dargestellten vierten Ausgestaltungsbeispiel einer erfindungsgemäßen Parksperre abgeleitet ist. Dabei zeigt die im Wesentlichen selbsterklärende Figur 29 den Parksperrenmechanismus bei ausgelegter Parksperre, gekennzeichnet durch das Bezugszeichen P_aus. Leicht ersichtlich ist, dass in Figur 29 der Parksperrenkolben 12 im Vergleich zu den Figuren 12A, 12B, 12C gespiegelt ausgeführt ist, sodass sowohl der beim Auslegen der Parksperre mit Druck zu beaufschlagende Druckraum 13 des Parksperrenkolbens 12 als auch das zwischen Steuergehäuse 11 und Parksperrenkolben 12 eingespannte Einlegefederelement 9 räumlich gesehen nunmehr auf derjenigen Seite des Parksperrenkolbens 12 angeordnet sind, die dem von dem Aktuatorkolben 12 betätigten Sperrelement 7 abgewandt ist. Infolgedessen ist die Rastiereinrichtung 14 nunmehr nahe an dem Sperrelement 7 angeordnet. Bei dieser Konstruktion ist die Rastiereinrichtung 14 in Richtung der Parksperrenkolben-Längsachse 20 gesehen also auf der dem Sperrelement 7 zugewandten Seite der kraftübertragenden Aussparung 15 des Aktuatorkolbens 12 angeordnet, wohingegen der Druckraum 13 und das Einlegefederelement 9 auf der dem Sperrelement 7 abgewandten Seite der kraftübertragenden Aussparung 15 des Aktuatorkolbens 12 angeordnet sind.

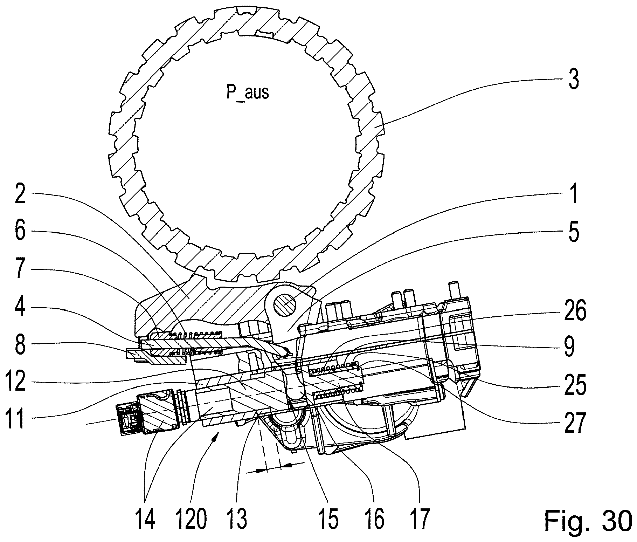

Bei einer Alternative zu der in Figur 29 dargestellten Variante mit gegenüber Figur 29 geänderter Konstruktion des Aktuatorkolbens 12 kann auch vorgesehen sein, dass sowohl die Rastiereinrichtung 14 als auch der Druckraum 13 des Aktuatorkolbens 12 nahe dem Sperrelement 7 angeordnet sein. Eine derartige Alternative ist Gegenstand von **Figur 30****,** als ein sechstes Ausgestaltungsbeispiel einer erfindungsgemäßen Parksperre. In Figur 30 ist abweichend zu Figur 29 sowohl die Rastierungseinrichtung 14 als auch der Druckraum 13 in Richtung der Parksperrenkolben-Längsachse 20 gesehen auf der dem Sperrelement 7 zugewandten Seite der kraftübertragenden Aussparung 15 des Aktuatorkolbens 12 angeordnet, wohingegen das Einlegefederelement 9 wie in Figur 29 auf der dem Sperrelement 7 abgewandten Seite der kraftübertragenden Aussparung 15 des Aktuatorkolbens 12 angeordnet ist.

### Bezugszeichen

- 1: Klinkenbolzen
- 2; 2a: Sperrklinke
- 3: Parksperrenrad
- 4: Verbindungsstange
- 5; 5a; 5b: Wählscheibe
- 6: Federelement
- 7: Sperrelement
- 8: Führungsplatte
- 9: Einlegefederelement
- 10: Klinkenbolzen-Längsachse; Sperrklinken-Schwenkachse; Wählscheiben-Drehachse
- 11: Steuergehäuse
- 12: Parksperrenkolben
- 13: Druckraum des Parksperrenkolbens
- 14: Rastiereinrichtung
- 15: Aussparung
- 16; 16a: Mitnehmer
- 17; 17a: Kolbenstange des Parksperrenkolbens
- 18: Nut
- 19; 19a: Stift
- 20; 20a: Parksperrenkolben-Längsachse
- 21: Einführfase
- 22: Einführfase
- 23: Rastiereinheit
- 24: Rastierhaken
- 25: Hülse
- 26: Hülse
- 27: Sprengringsicherung
- 28: kreisrunde Nut
- 29: Schenkel
- 30: Schenkel
- 31: Anschlagsfläche der Wählscheibe
- 32: Anschlagsfläche der Sperrklinke
- 33: Spalt
- 34; 34a: Federelement
- 35: Blattfeder
- 36: Verschraubungspunkt
- 37: gabelförmige Kontur
- 38: Führungsplattenverschraubung
- 39: Stift
- 40: Druckfeder
- 41: Druckfeder
- 42: Federführung
- 43: Federführungsschlitten
- 44: Stift
- 45: Anschraubpunkte

- 70: Sperrkegel
- 71: Anhebebereich des Sperrkegels
- 72: Sperrbereich des Sperrkegels
- 73: Führungsbereich des Sperrkegel
- 74: Aufschlagkontur der Sperrklinke
- 75: Sperrklinkenabschnitt nahe des Sperrbereichs
- 76: Sperrklinkenabschnitt nahe der Verbindungsstange

- 100: Senkrechte zur Parksperrenkolben-Längsachse mit Schnittpunkt durch die Wählscheiben-Drehachse
- 120: Parksperrenaktuator
- 121: elektrischer Stellantrieb
- 122: Elektromotor des elektrischen Stellantriebs
- 123: Spindeltrieb des elektrischen Stellantriebs

- 160: Schaltwinkel der Wählscheibe
- 161: Kontur des Mitnehmers; Wirkverbindung zwischen Mitnehmer und Parksperrenkolben beim Auslegen der Parksperre
- 162: Kreis bzw. Kreissegment, wirksam beim Auslegen der Parksperre
- 163: Kreismittelpunkt; Schnittpunkt der Senkrechten durch die Parksperrenkolben-Längsachse
- 164: Berührpunkt beim Auslegen der Parksperre
- 165: Kontur des Mitnehmers; Wirkverbindung zwischen Mitnehmer und Parksperrenkolben beim Einlegen der Parksperre
- 166: Radius um die Wählscheiben-Drehachse
- 167: Kreis bzw. Kreissegment, wirksam beim Einlegen der Parksperre
- 168: Berührpunkt beim Einlegen der Parksperre

- A: Detail
- P_aus: ausgelegter Zustand der Parksperre
- P_ein: eingelegter Zustand der Parksperre

## Patentansprüche

1. Parksperre für ein Automatgetriebe in einem Kraftfahrzeug, umfassend eine auf einem Klinkenbolzen (1) schwenkbar gelagerte Sperrklinke (2; 2a), die in ein mit dem Abtrieb des Automatgetriebes verbundenes Parksperrenrad (3) ein-oder ausrastet, sowie ein auf einer Verbindungsstange (4) zu einer Wählscheibe (5; 5a; 5b) angeordnetes, über ein Federelement (6) angefedertes Sperrelement (7), welches im eingelegten Zustand (P_ein) der Parksperre zwischen der Sperrklinke (2; 2a) und einer Führungsplatte (8) eingeklemmt ist, um ein Herausdrücken der Sperrklinke (2; 2a) aus einer Zahnlücke des Parksperrenrades (3) zu verhindern, wobei das dem Sperrelement (7) abgewandte Ende der Verbindungsstange (4) an der Wählscheibe (5; 5a; 5b) angelenkt ist, wobei die Wählscheibe (5; 5a; 5b) mit einem Parksperrenaktuator (120) derart wirkverbunden ist, dass ein Auslegen der Parksperre durch eine Betätigungskraft des Parksperrenaktuators (120) gegen eine Federkraft eines Einlegefederelementes (9) erfolgt, wohingegen ein Einlegen der Parksperre durch die Kraft des Einlegefederelementes (9) erfolgt, **dadurch gekennzeichnet, dass** die Verbindungsstange (4) derart unterhalb der Sperrklinke (2; 2a) angeordnet ist, dass die Bewegungsebene der Verbindungsstange (4) im Wesentlichen parallel zur Bewegungsebene der Sperrklinke (2; 2a) und im Wesentlichen senkrecht zum Klinkenbolzen (1) angeordnet ist, wobei die Wählscheibe (5; 5a; 5b) auf dem Klinkenbolzen (1) drehbar gelagert ist.

2. Parksperre nach Anspruch 1, **dadurch gekennzeichnet, dass** der Parksperrenaktuator (120) einen in einem Steuergehäuse (11) axial verschiebbaren, hydraulisch betätigbaren Parksperrenkolben (12) umfasst, der mit einem Mitnehmer (16) der Wählscheibe (5; 5a; 5b) wirkverbunden ist.

3. Parksperre nach Anspruch 2, **dadurch gekennzeichnet, dass** das Steuergehäuse (11) und der Parksperrenkolben (12) jeweils eine Aussparung (15) aufweisen, durch die ein mit der Wählscheibe (5; 5a; 5b) drehfest verbundener oder mit der Wählscheibe (5; 5a; 5b) einstückig ausgeführter Mitnehmer (16) geführt ist, um zwischen der Wählscheibe (5; 5a; 5b) und dem Parksperrenkolben (12) eine Wirkverbindung herzustellen.

4. Parksperre nach Anspruch 3, **dadurch gekennzeichnet, dass** der Mitnehmer (16) im Aktuierungsbereich zwei geometrisch unterschiedliche Konturen (161, 165) aufweist, von denen eine (161) beim Auslegen der Parksperre die Wirkverbindung zum Parksperrenkolben (12) bildet und die andere (165) beim Einlegen der Parksperre die Wirkverbindung zum Parksperrenkolben (12) bildet.

5. Parksperre nach Anspruch 4, **dadurch gekennzeichnet, dass** die beim Auslegen der Parksperre die Wirkverbindung zwischen Wählscheibe (5) und Parksperrenkolben (12) bildende Kontur (161) des Mitnehmers (16) geometrisch derart ausgebildet ist, dass für jeden im Betriebsbereich möglichen Schaltwinkel (160) der Wählscheibe (5) ein auf den Parksperrenkolben (12) beim Auslegen der Parksperre wirksamer Hebelarm der Wählscheibe (5) beim Auslegen der Parksperre zumindest annährend konstant bleibt.

6. Parksperre nach Anspruch 4, **dadurch gekennzeichnet, dass** die beim Auslegen der Parksperre die Wirkverbindung zwischen Wählscheibe (5) und Parksperrenkolben (12a) bildende Kontur (161) des Mitnehmers (16) geometrisch derart ausgebildet ist, dass für einen im Betriebsbereich möglichen Schaltwinkel (160) der Wählscheibe (5) der Berührpunkt (164), in dem diese Kontur (161) den Parksperrenkolben (12) in diesem Schaltwinkel (160) berührt, auf einer Längsachse (20) des Parksperrenkolbens (12) liegt.

7. Parksperre nach Anspruch 4, **dadurch gekennzeichnet, dass** die beim Einlegen der Parksperre die Wirkverbindung zwischen Wählscheibe (5) und Parksperrenkolben (12) bildende Kontur (165) des Mitnehmers (16) geometrisch derart ausgebildet ist, dass für jeden im Betriebsbereich möglichen Schaltwinkel (160) der Wählscheibe (5) in allen Berührpunkten (168), in denen diese Kontur (165) den Parksperrenkolben (12a) abhängig vom Schaltwinkel (160) berührt, beim Einlegen der Parksperre der Mitnehmer (16) gegen den Parksperrenkolben (12a) abrollt.

8. Parksperre nach Anspruch 4, **dadurch gekennzeichnet, dass** der Mitnehmer (16) im Aktuierungsbereich eine Nut (18) aufweist, welche in einen mit dem Parksperrenkolben (12) verbundenen Stift (19) greift, wobei die Nut (18) als gerader Schlitz oder nierenförmig ausgeführt ist und der Stift (19) senkrecht zu der Parksperrenkolbenlängsachse (20) angeordnet ist.

9. Parksperre nach Anspruch 8, **dadurch gekennzeichnet, dass** die Nut (18) derart nierenförmig ausgeführt ist, dass sie zu einer axialen Wegverlängerung des Sperrelementes (7) bei gleichem Weg des Parksperrenkolbens (12) führt.

10. Parksperre nach Anspruch 8, **dadurch gekennzeichnet, dass** die Nut (18) derart nierenförmig ausgeführt ist, dass der Parksperrenkolben (12) in den beiden Endlagen, also bei eingelegter und bei ausgelegter Parksperre, keine Querkräfte erfährt.

11. Parksperre nach einem der Ansprüche 8 bis 10 **dadurch gekennzeichnet, dass** das dem Parksperrenkolben (12) zugewandte Ende des Mitnehmers (16) Einführfasen (21) aufweist, um das Einführen des Mitnehmers (16) und das Finden des Stiftes (19) zu erleichtern, und dass der Parksperrenkolben (12a) im Bereich der Aussparung (15) Einführphasen (22) aufweist, um das Einführen des Mitnehmers (16) zu erleichtern.

12. Parksperre nach Anspruch 1, **dadurch gekennzeichnet, dass** der Parksperrenaktuator (120) als elektrischer Stellantrieb (121) ausgebildet ist, der mit der Wählscheibe (5) wirkverbunden ist.

13. Parksperre nach einem der Ansprüche 1 bis 12, **dadurch gekennzeichnet, dass** der Parksperrenaktuator (120) im Wesentlichen parallel zur Verbindungsstange (4) räumlich gesehen unterhalb der Verbindungsstange (4) angeordnet ist.

14. Parksperre nach einem der Ansprüche 1 bis 13, **dadurch gekennzeichnet, dass** das Einlegefederelement (9) als Schenkelfeder ausgeführt ist, deren Windungen um den Klinkenbolzen (1) angeordnet sind.

15. Parksperre nach einem der Ansprüche 2 bis 13, **dadurch gekennzeichnet, dass** das Einlegefederelement (9) als Druckfeder ausgeführt ist, die axial betrachtet die Kolbenstange (17) des Parksperrenkolbens (12) ganz oder teilweise konzentrisch umschließt.

16. Parksperre nach Anspruch 15, **dadurch gekennzeichnet, dass** die Druckfeder (9) auf Hülsen (25, 26) geführt ist, um die Kolbenstange (17) vor Beschädigungen zu schützen, wobei sich die auf der dem Steuergehäuse (11) zugewandten Seite der Druckfeder (9) vorgesehene Hülse (26) am Gehäuse des Steuergehäuse (11) abstützt und die andere, auf der dem Steuergehäuse (11) abgewandten Seite der Druckfeder (9) vorgesehene Hülse (25) durch eine Sprengringsicherung (27) gehalten wird, wobei der Sprengring durch die Hülse (25) radial gegen Austreten gesichert ist.

17. Parksperre nach Anspruch 15, **dadurch gekennzeichnet, dass** am Steuergehäuse (11) eine um eine Mittelachse der Kolbenstange (17) umlaufende kreisrunde Nut (28) vorgesehen ist, in dem das dem Steuergehäuse (11) zugewandte Ende der Druckfeder (9) liegt, wobei das dem Steuergehäuse (11) abgewandte Ende der Druckfeder (9) auf einer Hülse (25) geführt ist, welche durch eine Sprengringsicherung (27) gehalten wird, wobei der Sprengring durch die Hülse (25) radial gegen Austreten gesichert ist.

18. Parksperre nach einem der Ansprüche 2 bis 13, **dadurch gekennzeichnet, dass** das Einlegefederelement (9) als Blattfeder (35) ausgeführt ist, deren eines Ende mit dem Getriebegehäuse und optional mit der Führungsplatte (8) verschraubt ist und deren anderes Ende mit einer gabelförmigen Kontur (37) auf die Kolbenstange (17) des Parksperrenkolbens (12) mittels eines in der Kolbenstange (17) verliersicher gelagerten Stiftes (39) greift.

19. Parksperre nach einem der Ansprüche 2 bis 13, **dadurch gekennzeichnet, dass** als Einlegefederelement (9) zumindest zwei parallel zueinander angeordnete Druckfedern (40, 41) vorgesehen sind, welche in einer mit dem Steuergehäuse (11) verbundenen Federführung (42) parallel zur Kolbenstange (17) des Parksperrenkolbens (12a) angeordnet sind und in dieser geführt werden, wobei ein Verfahrweg der zumindest zwei Druckfedern (40, 41) durch einen mit der Kolbenstange (17) des Parksperrenkolbens (12) wirkverbundenen, in der Federführung (42) verschiebbar angeordneten Federführungsschlitten (43) ermöglicht wird, an dem sich jeweils ein Ende der zumindest zwei Druckfedern (40, 41) abstützt, wobei sich das andere Ende der zumindest zwei Druckfedern (40, 41) an der Federführung (42) abstützt, wobei der Federführungsschlitten (43) durch Anschlagpunkte innerhalb der Federführung (42) verliersicher gelagert ist und wobei die auf den Federführungsschlitten (43) wirkende Federkraft der zumindest zwei Druckfedern (40, 41) mittels eines Maschinenelementes auf die Kolbenstange (17) des Parksperrenkolbens (12) übertragen wird.

20. Parksperre nach einem der Ansprüche 1 bis 19, **dadurch gekennzeichnet, dass** die Wählscheibe (5) zwei Schenkel (29, 30) aufweist, die jeweils eine kreisrunde Bohrung aufweisen, wobei die Bohrungen koaxial zueinander angeordnet sind und der Lagerung der Wählscheibe (5; 5b) auf dem Klinkenbolzen (1) dienen, wobei die Sperrklinke (2; 2a) zwischen den beiden Schenkeln gelagert ist.

21. Parksperre nach einem der Ansprüche 1 bis 20, **dadurch gekennzeichnet, dass** zum Niederhalten der Sperrklinke (2a) im ausgelegten Zustand (P_aus) der Parksperre an der Wählscheibe (5b) ein Anschlag für die Sperrklinke (2a) vorgesehen ist, welcher im ausgelegten Zustand (P_aus) der Parksperre ein Berühren der Sperrklinke (2a) an dem Parksperrenrad (3) verhindert.

22. Parksperre nach Anspruch 21, **dadurch gekennzeichnet, dass** als Anschlag der Wählscheibe (5b) eine Anschlagsfläche (31) vorgesehen ist, die mit einer korrespondierenden Anschlagsfläche (32) der Sperrklinke (2a) zusammenwirkt, wobei im ausgelegten Zustand (P_aus) der Parksperre zwischen der Anschlagsfläche (31) der Wählscheibe (5b) und der korrespondierenden Anschlagsflächen (32) der Sperrklinke (2a) kein Spalt vorgesehen ist.

23. Parksperre nach Anspruch 21, **dadurch gekennzeichnet, dass** als Anschlag der Wählscheibe (5b) eine Anschlagsfläche (31) vorgesehen ist, die mit einer korrespondierenden Anschlagsfläche (32) der Sperrklinke (2a) zusammenwirkt, wobei im ausgelegten Zustand (P_aus) der Parksperre zwischen der Anschlagsfläche (31) der Wählscheibe (5b) und der korrespondierenden Anschlagsflächen (32) der Sperrklinke (2a) ein Spalt (33) vorgesehen ist.

24. Parksperre nach Anspruch 21 oder 22, **dadurch gekennzeichnet, dass** an einer der Anschlagsflächen (31, 32) ein Federelement (34) angeordnet ist, welches derart ausgelegt ist, dass es das Einlegefederelement (9) beim Einlegen der Parksperre unterstützt oder ersetzt.

25. Parksperre nach Anspruch 21 oder 22, **dadurch gekennzeichnet, dass** an beiden Anschlagsflächen (31, 32) ein Federelement (34) angeordnet ist, welches derart ausgelegt ist, dass es das Einlegefederelement (9) beim Einlegen der Parksperre unterstützt oder ersetzt.

26. Parksperre nach einem der Ansprüche 1 bis 20, **dadurch gekennzeichnet, dass** zum Niederhalten der Sperrklinke (2a) im ausgelegten Zustand (P_aus) der Parksperre ein Federelement (34a) vorgesehen ist, welches im ausgelegten Zustand (P_aus) der Parksperre ein Berühren der Sperrklinke (2a) an dem Parksperrenrad (3) verhindert.

27. Parksperre nach Anspruch 26, **dadurch gekennzeichnet, dass** das Federelement (34a) derart ausgelegt ist, dass es das Einlegefederelement (9) beim Einlegen der Parksperre unterstützt oder ersetzt.

28. Parksperre nach Anspruch 26 oder 27, **dadurch gekennzeichnet, dass** das Federelement (34a) an der Wählscheibe (5b) vorgespannt ist, derart, dass ein freies Ende des Federelementes (34a) nur dann mit der Sperrklinke (2a) kraftschlüssig in Kontakt kommt, wenn die Wählscheibe (5b) ausgehend von ihrer Stellung im eingelegten Zustand (P_ein) der Parksperre um einen vordefinierten Winkel in Richtung ihrer Stellung im ausgelegten Zustand (P_aus) der Parksperre verdreht wird,
sodass dann, wenn das freie Ende des Federelementes (34a) kraftschlüssig auf die Sperrklinke (2a) wirkt, die auf die Sperrklinke (2a) wirkende Kraft des Federelementes (34a) einen Kontakt zwischen Sperrklinke (2a) und Parksperrenrad (3) verhindert.

29. Parksperre nach Anspruch 26 oder 27, **dadurch gekennzeichnet, dass** das Federelement (34a) an der Wählscheibe (5b) vorgespannt ist, derart, dass ein freies Ende des Federelementes (34a) bereits mit der Sperrklinke (2a) kraftschlüssig in Kontakt ist, wenn sich Wählscheibe (5b) in ihrer Stellung im eingelegten Zustand (P_ein) der Parksperre befindet,
wobei dann, wenn die Wählscheibe (5b) ausgehend von ihrer Stellung im eingelegten Zustand (P_ein) der Parksperre in Richtung ihrer Stellung im ausgelegten Zustand (P_aus) der Parksperre verdreht wird, sich die auf die Sperrklinke (2a) wirkende Kraft des Federelementes (34a) derart erhöht, dass ein Kontakt zwischen Sperrklinke (2a) und Parksperrenrad (3) sicher verhindert wird.

30. Parksperre nach einem der Ansprüche 1 bis 29, **dadurch gekennzeichnet, dass** die Sperrklinke (2a) geometrisch derart ausgebildet ist, dass sie sowohl im statisch eingelegten Zustand (P_ein) der Parksperre als auch im statisch ausgelegten Zustand (P_aus) der Parksperre kraftschlüssig an dem Sperrelement (7) anliegt.

31. Parksperre nach Anspruch 30, **dadurch gekennzeichnet, dass** die Sperrklinke (2a) eine erste Funktionsfläche aufweist, die im eingelegten Zustand (P_ein) der Parksperre das Sperrelement (7) zwischen Sperrklinke (2a) und Führungsplatte (8) eingeklemmt, und dass die Sperrklinke (2a) eine zweite Funktionsfläche aufweist, die im ausgelegten Zustand (P_aus) der Parksperre an einer korrespondierenden Fläche des Sperrelementes (7) anliegt.

32. Verfahren zur Montage des Mitnehmers (16) der Wählscheibe (5) in den Parksperrenkolben (12a) bei einer Parksperre nach einem der Ansprüche 2 bis 11, wobei das Einlegefederelement (9) als Druckfeder ausgeführt ist, die axial betrachtet die Kolbenstange (17) des Parksperrenkolbens (12) ganz oder teilweise konzentrisch umschließt,
**gekennzeichnet durch** folgende Verfahrensschritte:
a) Schieben des Parksperrenkolbens (12) in eine Kolbenbohrung des Steuergehäuse (11),
b) anschließend Einschieben einer elektrisch betätigbaren Rastiereinheit (23) in die Kolbenbohrung, wobei die Rastiereinheit (23) Rastelemente für die beiden Endstellungen "Parksperre eingelegt" und "Parksperre ausgelegt" aufweist, welche im unbestromten Zustand verhindern, dass der Parksperrenkolben (12) in seine Stellung "Parksperre eingelegt" geschoben werden kann;
c) anschließend Montieren der Druckfeder (9) auf die Kolbenstange (17);
d) anschließend Anschrauben des Steuergehäuses (11) an ein Getriebegehäuse oder an ein elektrohydraulisches Getriebesteuergerät,
wobei sich der Parksperrenkolben (12) vor dem Anschrauben in seiner Stellung "Parksperre eingelegt" befindet und wobei sich die Wählscheibe (5) vor dem Anschrauben in ihrer Stellung "Parksperre ausgelegt" befindet;
e) anschließend Bestromung der Rastiereinheit (23), sodass die Druckfeder (9) auf der Kolbenstange (17) soweit überdrückt wird, dass die Kolbenstange (17) ihre Stellung "Parksperre ausgelegt" erreicht,
wobei dann, wenn der Parksperrenkolben (12) seine Stellung "Parksperre ausgelegt" erreicht, die Bestromung der Rastiereinheit (23) unterbrochen wird, sodass die Rastiereinheit (23) in ihre Stellung "Parksperre ausgelegt" einfällt, wobei der Mitnehmer (16) und die Aussparung (15) des Parksperrenkolbens (12) in Stellung "Parksperre ausgelegt" übereinander angeordnet sind;
f) anschließend Führen des Mitnehmers (16) mittels eines geeigneten Werkzeugs gezielt auf den Stift (19).

## Claims

1. Parking lock for an automatic transmission in a motor vehicle, comprising a pawl (2; 2a) which is mounted pivotably on a pawl journal (1) and which engages with detent action into, or disengages from, a parking lock wheel (3) which is connected to the output of the automatic transmission, and comprising a lock element (7) which is arranged on a connecting rod (4) to a selector disc (5; 5a; 5b) and which is spring-loaded by means of a spring element (6) and which, in the engaged state (P_ein) of the parking lock, is clamped between the pawl (2; 2a) and a guide plate (8) in order to prevent the pawl (2; 2a) from being pushed out of a tooth space of the parking lock wheel (3), wherein that end of the connecting rod (4) which is averted from the lock element (7) is articulated on the selector disc (5; 5a; 5b), wherein the selector disc (5; 5a; 5b) is operatively connected to a parking lock actuator (120) such that a disengagement of the parking lock is performed by means of an actuating force of the parking lock actuator (120) counter to a spring force of an engagement spring element (9), whereas an engagement of the parking lock is performed by means of the force of the engagement spring element (9), **characterized in that** the connecting rod (4) is arranged below the pawl (2; 2a) such that the plane of movement of the connecting rod (4) is arranged substantially parallel to the plane of movement of the pawl (2; 2a) and substantially perpendicular to the pawl journal (1), wherein the selector disc (5; 5a; 5b) is mounted rotatably on the pawl journal (1).

2. Parking lock according to Claim 1, **characterized in that** the parking lock actuator (120) comprises a hydraulically actuatable parking lock piston (12) which is axially displaceable in a control housing (11) and which is operatively connected to a driver (16) of the selector disc (5; 5a; 5b).

3. Parking lock according to Claim 2, **characterized in that** the control housing (11) and the parking lock piston (12) each have a cutout (15) through which a driver (16), which is connected rotationally conjointly to the selector disc (5; 5a; 5b) or which is formed integrally with the selector disc (5; 5a; 5b), is guided in order to produce an operative connection between the selector disc (5; 5a; 5b) and the parking lock piston (12).

4. Parking lock according to Claim 3, **characterized in that** the driver (16) has, in the actuation region, two geometrically different contours (161, 165), of which one (161) forms the operative connection to the parking lock piston (12) during the disengagement of the parking lock and the other (165) forms the operative connection to the parking lock piston (12) during the engagement of the parking lock.

5. Parking lock according to Claim 4, **characterized in that** that contour (161) of the driver (16) which forms the operative connection between selector disc (5) and parking lock piston (12) during the disengagement of the parking lock is geometrically designed such that, for all shift angles (160) of the selector disc (5) that are possible in the operating range, a lever arm of the selector disc (5) which acts on the parking lock piston (12) during the disengagement of the parking lock remains at least approximately constant during the disengagement of the parking lock.

6. Parking lock according to Claim 4, **characterized in that** that contour (161) of the driver (16) which forms the operative connection between selector disc (5) and parking lock piston (12) during the disengagement of the parking lock is geometrically designed such that, for one shift angle (160) of the selector disc (5) that is possible in the operating range, the contact point (164) at which said contour (161) makes contact with the parking lock piston (12) at said shift angle (160) lies on a longitudinal axis (20) of the parking lock piston (12) .

7. Parking lock according to Claim 4, **characterized in that** that contour (165) of the driver (16) which forms the operative connection between selector disc (5) and parking lock piston (12) during the engagement of the parking lock is geometrically designed such that, during the engagement of the parking lock, for all shift angles (160) of the selector disc (5) that are possible in the operating range, the driver (16) rolls against the parking lock piston (12a) at all contact points (168) at which said contour (165) makes contact with the parking lock piston (12a) in a manner dependent on the shift angle (160).

8. Parking lock according to Claim 4, **characterized in that** the driver (16) has, in the actuation region, a groove (18) which engages with a pin (19) which is connected to the parking lock piston (12), wherein the groove (18) is designed as a straight slot or with a kidney shape, and the pin (19) is arranged perpendicular to the parking lock piston longitudinal axis (20).

9. Parking lock according to Claim 8, **characterized in that** the groove (18) is of kidney-shaped design such that, for an unchanged travel of the parking lock piston (12), said groove leads to an axial lengthening of the travel of the lock element (7).

10. Parking lock according to Claim 8, **characterized in that** the groove (18) is of kidney-shaped design such that the parking lock piston (12) is not subjected to any transverse forces in the two end positions, that is to say when the parking lock is engaged and when it is disengaged.

11. Parking lock according to any of Claims 8 to 10, **characterized in that** that end of the driver (16) which faces towards the parking lock piston (12) has insertion bevels (21) in order to facilitate the insertion of the driver (16) and the locating of the pin (19), and **in that** the parking lock piston (12a) has insertion bevels (22) in the region of the cutout (15) in order to facilitate the insertion of the driver (16).

12. Parking lock according to Claim 1, **characterized in that** the parking lock actuator (120) is designed as an electrical actuating drive (121) which is operatively connected to the selector disc (5).

13. Parking lock according to any of Claims 1 to 12, **characterized in that**, viewed three-dimensionally, the parking lock actuator (120) is arranged substantially parallel to the connecting rod (4) and below the connecting rod (4).

14. Parking lock according to any of Claims 1 to 13, **characterized in that** the engagement spring element (9) is designed as a leg spring, the turns of which are arranged around the pawl journal (1).

15. Parking lock according to any of Claims 2 to 13, **characterized in that** the engagement spring element (9) is designed as a compression spring which, viewed axially, entirely or partially concentrically surrounds the piston rod (17) of the parking lock piston (12).

16. Parking lock according to Claim 15, **characterized in that** the compression spring (9) is guided on sleeves (25, 26) in order to protect the piston rod (17) against damage, wherein the sleeve (26), which is provided on that side of the compression spring (9) which faces towards the control housing (11), is supported on the housing of the control housing (11), and the other sleeve (25), which is provided on that side of the compression spring (9) which is averted from the control housing (11), is held by a securing circlip (27), wherein the circlip is secured against radial escape by the sleeve (25) .

17. Parking lock according to Claim 15, **characterized in that**, on the control housing (11), there is provided a circular groove (28) which encircles a central axis of the piston rod (17) and in which that end of the compression spring (9) which faces towards the control housing (11) lies, wherein that end of the compression spring (9) which is averted from the control housing (11) is guided on a sleeve (25) which is held by a securing circlip (27), wherein the circlip is secured against radial escape by the sleeve (25).

18. Parking lock according to any of Claims 2 to 13, **characterized in that** the engagement spring element (9) is designed as a leaf spring (35), one end of which is screwed to the transmission housing and optionally to the guide plate (8) and the other end of which engages with a fork-shaped contour (37) on the piston rod (17) of the parking lock piston (12) by means of a pin (39) which is mounted captively in the piston rod (17).

19. Parking lock according to any of Claims 2 to 13, **characterized in that**, as engagement spring element (9), at least two compression springs (40, 41) are provided which are arranged parallel to one another and which are arranged parallel to the piston rod (17) of the parking lock piston (12a), and guided, in a spring guide (42) which is connected to the control housing (11), wherein a movement travel of the at least two compression springs (40, 41) is made possible by a spring guide carriage (43) which is operatively connected to the piston rod (17) of the parking lock piston (12) and which is arranged displaceably in the spring guide (42) and on which in each case one end of the at least two compression springs (40, 41) is supported, wherein the other end of the at least two compression springs (40, 41) is supported on the spring guide (42), wherein the spring guide carriage (43) is mounted captively within the spring guide (42) by means of stop points, and wherein the spring force, acting on the spring guide carriage (43), of the at least two compression springs (40, 41) is transmitted by means of a machine element to the piston rod (17) of the parking lock piston (12).

20. Parking lock according to any of Claims 1 to 19, **characterized in that** the selector disc (5) has two limbs (29, 30) which each have a circular bore, wherein the bores are arranged coaxially with respect to one another and serve for the mounting of the selector disc (5; 5b) on the pawl journal (1), wherein the pawl (2; 2a) is mounted between the two limbs.

21. Parking lock according to any of Claims 1 to 20, **characterized in that**, to hold down the pawl (2a) in the disengaged state (P_aus) of the parking lock, a stop for the pawl (2a) is provided on the selector disc (5b), which stop prevents the pawl (2a) from making contact with the parking lock wheel (3) in the disengaged state (P_aus) of the parking lock.

22. Parking lock according to Claim 21, **characterized in that**, as a stop of the selector disc (5b), a stop surface (31) is provided which interacts with a corresponding stop surface (32) of the pawl (2a), wherein, in the disengaged state (P_aus) of the parking lock, no gap is provided between the stop surface (31) of the selector disc (5b) and the corresponding stop surfaces (32) of the pawl (2a).

23. Parking lock according to Claim 21, **characterized in that**, as a stop of the selector disc (5b), a stop surface (31) is provided which interacts with a corresponding stop surface (32) of the pawl (2a), wherein, in the disengaged state (P_aus) of the parking lock, a gap (33) is provided between the stop surface (31) of the selector disc (5b) and the corresponding stop surfaces (32) of the pawl (2a).

24. Parking lock according to Claim 21 or 22, **characterized in that**, on one of the stop surfaces (31, 32), there is arranged a spring element (34) which is configured so as to assist or replace the engagement spring element (9) during the engagement of the parking lock.

25. Parking lock according to Claim 21 or 22, **characterized in that**, on both stop surfaces (31, 32), there is arranged a spring element (34) which is configured so as to assist or replace the engagement spring element (9) during the engagement of the parking lock.

26. Parking lock according to any of Claims 1 to 20, **characterized in that**, to hold down the pawl (2a) in the disengaged state (P_aus) of the parking lock, a spring element (34a) is provided which, in the disengaged state (P_aus) of the parking lock, prevents the pawl (2a) from making contact with the parking lock wheel (3).

27. Parking lock according to Claim 26, **characterized in that** the spring element (34a) is configured so as to assist or replace the engagement spring element (9) during the engagement of the parking lock.

28. Parking lock according to Claim 26 or 27, **characterized in that** the spring element (34a) is preloaded against the selector disc (5b) such that a free end of the spring element (34a) comes into non-positively locking contact with the pawl (2a) only when the selector disc (5b), proceeding from its position in the engaged state (P_ein) of the parking lock, is rotated by a predefined angle in the direction of its position in the disengaged state (P_aus) of the parking lock,
such that, when the free end of the spring element (34a) acts in non-positively locking fashion on the pawl (2a), the force, acting on the pawl (2a), of the spring element (34a) prevents contact between pawl (2a) and parking lock wheel (3).

29. Parking lock according to Claim 26 or 27, **characterized in that** the spring element (34a) is preloaded against the selector disc (5b) such that a free end of the spring element (34a) is already in non-positively locking contact with the pawl (2a) when the selector disc (5b) is situated in its position in the engaged state (P_ein) of the parking lock,
wherein, when the selector disc (5b) is rotated from its position in the engaged state (P_ein) of the parking lock in the direction of its position in the disengaged state (P_aus) of the parking lock, the force, acting on the pawl (2a), of the spring element (34a) is increased such that contact between pawl (2a) and parking lock wheel (3) is reliably prevented.

30. Parking lock according to any of Claims 1 to 29, **characterized in that** the pawl (2a) is geometrically designed such that it lies in non-positively locking fashion against the lock element (7) both in the statically engaged state (P_ein) of the parking lock and in the statically disengaged state (P_aus) of the parking lock.

31. Parking lock according to Claim 30, **characterized in that** the pawl (2a) has a first functional surface, which in the engaged state (P ein) of the parking lock clamps the lock element (7) between pawl (2a) and guide plate (8), and **in that** the pawl (2a) has a second functional surface, which in the disengaged state (P_aus) of the parking lock lies against a corresponding surface of the lock element (7).

32. Method for installing the driver (16) of the selector disc (5) into the parking lock piston (12a) in a parking lock according to any of Claims 2 to 11, wherein the engagement spring element (9) is designed as a compression spring which, viewed axially, entirely or partially concentrically surrounds the piston rod (17) of the parking lock piston (12),
**characterized by** the following method steps:
a) pushing the parking lock piston (12) into a piston bore of the control housing (11),
b) subsequently pushing an electrically actuatable arresting unit (23) into the piston bore, wherein the arresting unit (23) has detent elements for the two end positions "parking lock engaged" and "parking lock disengaged", which in the electrically deenergized state prevent the parking lock piston (12) from being able to be pushed into its position "parking lock engaged";
c) subsequently installing the compression spring (9) onto the piston rod (17);
d) subsequently screwing the control housing (11) onto a transmission housing or onto an electrohydraulic transmission control unit,
wherein the parking lock piston (12) is situated in its position "parking lock engaged" before the screwing-on process and wherein the selector disc (5) is situated in its position "parking lock disengaged" before the screwing-on process;
e) subsequently electrically energizing the arresting unit (23) such that the compression spring (9) on the piston rod (17) is compressed to such an extent that the piston rod (17) reaches its position "parking lock disengaged",
wherein, when the parking lock piston (12) reaches its position "parking lock disengaged", the electrical energization of the arresting unit (23) is shut off such that the arresting unit (23) engages into its position "parking lock disengaged", wherein the driver (16) and the cutout (15) of the parking lock piston (12) are arranged one above the other in the position "parking lock disengaged";
f) subsequently guiding the driver (16) in targeted fashion onto the pin (19) by means of a suitable tool.

## Revendications

1. Frein de stationnement destiné à une transmission automatique d'un véhicule automobile, le frein de stationnement comprenant un cliquet (2 ; 2a) qui est monté de manière pivotante sur un boulon de cliquet (1) et qui s'engage dans une roue de frein de stationnement (3), reliée à la sortie de la transmission automatique, ou se désengage de celle-ci, et un élément de frein (7) qui est monté élastiquement par le biais d'un élément à ressort (6), qui est disposé sur une barre de liaison (4) menant à un disque de sélection (5 ; 5a ; 5b) et qui est serré, lorsque le frein de stationnement est engagé (P_ein), entre le cliquet (2 ; 2a) et une plaque de guidage (8) pour empêcher l'expulsion du cliquet (2 ; 2a) d'un espace de dent de la roue de frein de stationnement (3), l'extrémité de la barre de liaison (4), qui est opposée à l'élément de frein (7), étant reliée de manière articulée au disque de sélection (5 ; 5a ; 5b), le disque de sélection (5 ; 5a ; 5b) étant relié fonctionnellement à un actionneur de frein de stationnement (120) de manière à ce que le désengagement du frein de stationnement soit effectué par une force d'actionnement de l'actionneur de frein de stationnement (120) s'opposant à une force de ressort d'un élément d'engagement à ressort (9), alors que l'engagement du frein de stationnement est effectué par la force de l'élément d'engagement à ressort (9), **caractérisé en ce que** la barre de liaison (4) est disposée au-dessous du cliquet (2 ; 2a) de manière à ce que le plan de déplacement de la barre de liaison (4) est sensiblement parallèle au plan de déplacement du cliquet (2 ; 2a) et sensiblement perpendiculaire au boulon de cliquet (1), le disque de sélection (5 ; 5a ; 5b) étant monté de manière rotative sur le boulon de cliquet (1).

2. Frein de stationnement selon la revendication 1, **caractérisé en ce que** l'actionneur de frein de stationnement (120) comprend un piston de frein de stationnement à commande hydraulique (12) qui est déplaçable axialement dans un boîtier de commande (11) et qui est relié fonctionnellement à un entraîneur (16) du disque de sélection (5 ; 5a ; 5b).

3. Frein de stationnement selon la revendication 2, **caractérisé en ce que** le boîtier de commande (11) et le piston de frein de stationnement (12) comportent chacun un évidement (15) à travers lequel est guidé un entraîneur (16) qui est relié solidairement en rotation au disque de sélection (5 ; 5a ; 5b) ou qui est réalisé d'une seule pièce avec le disque de sélection (5 ; 5a ; 5b) afin d'établir une liaison fonctionnelle entre le disque de sélection (5 ; 5a ; 5b) et le piston de frein de stationnement (12).

4. Frein de stationnement selon la revendication 3, **caractérisé en ce que** l'entraîneur (16) présente dans la zone d'actionnement deux contours (161, 165) géométriquement différents dont l'un (161) forme la liaison fonctionnelle avec le piston de frein de stationnement (12) lorsque le frein de stationnement est désengagé et l'autre (165) forme la liaison fonctionnelle avec le piston de frein de stationnement (12) lorsque le frein de stationnement est engagé.

5. Frein de stationnement selon la revendication 4, **caractérisé en ce que** le contour (161) de l'entraîneur (16), lequel contour forme la liaison fonctionnelle entre le disque de sélection (5) et le piston de frein de stationnement (12) lorsque le frein de stationnement est désengagé, est conçu géométriquement de manière à ce que, pour chaque angle de commutation possible du disque de sélection (5) dans la zone de fonctionnement (160), un bras de levier du disque de sélection (5), qui agit sur le piston de frein de stationnement (12) lorsque le frein de stationnement est désengagé, reste au moins approximativement constant lorsque le frein de stationnement est désengagé.

6. Frein de stationnement selon la revendication 4, **caractérisé en ce que** le contour (161) de l'entraîneur (16), qui forme la liaison fonctionnelle entre le disque de sélection (5) et le piston de frein de stationnement (12a) lorsque le frein de stationnement est désengagé, est conçu géométriquement de manière à ce que, pour un angle de commutation possible du disque de sélection (5) dans la zone de fonctionnement (160), le point de contact (164), où ce contour (161) touche le piston de frein de stationnement (12) à cet angle de commutation (160), est situé sur un axe longitudinal (20) du piston de frein de stationnement (12).

7. Frein de stationnement selon la revendication 4, **caractérisé en ce que** le contour (165) de l'entraîneur (16), lequel contour forme la liaison fonctionnelle entre le disque de sélection (5) et le piston de frein de stationnement (12) lorsque le frein de stationnement est engagé, est conçu géométriquement de manière à ce que, pour chaque angle de commutation possible du disque de sélection (5) dans la zone de fonctionnement (160), l'entraîneur (16) roule contre le piston de frein de station (12a) en tous points de contact (168) où ce contour (165) touche le piston de frein de stationnement (12a) en fonction de l'angle de commutation (160) lorsque le frein de stationnement est engagé.

8. Frein de stationnement selon la revendication 4, **caractérisé en ce que** l'entraîneur (16) comporte dans la zone d'actionnement une rainure (18) dans laquelle s'engage une tige (19) reliée au piston de frein de stationnement (12), la rainure (18) étant conçue comme une fente droite ou en forme de rein et la tige (19) étant disposée perpendiculairement à l'axe longitudinal (20) du piston de frein de stationnement.

9. Frein de stationnement selon la revendication 8, **caractérisé en ce que** la rainure (18) est en forme de rein de façon à entraîner une extension de trajectoire axiale de l'élément de frein (7) pour une même trajectoire du piston de frein de stationnement (12).

10. Frein de stationnement selon la revendication 8, **caractérisé en ce que** la rainure (18) est en forme de rein de sorte que le piston de frein de stationnement (12) n'est soumis à aucune force transversale aux deux positions extrêmes, c'est-à-dire lorsque le frein de stationnement est engagé et désengagé.

11. Frein de stationnement selon l'une des revendications 8 à 10, **caractérisé en ce que** l'extrémité de l'entraîneur (16), qui est dirigée vers le piston de frein de stationnement (12), comporte des chanfreins d'insertion (21) destinés à faciliter l'insertion de l'entraîneur (16) et la recherche de la tige (19), et **en ce que** le piston de frein de stationnement (12a) comporte dans la zone de l'évidement (15) des chanfreins d'insertion (22) destinés à faciliter l'insertion de l'entraîneur (16).

12. Frein de stationnement selon la revendication 1, **caractérisé en ce que** l'actionneur de frein de stationnement (120) est réalisé sous la forme d'un actionneur électrique (121) qui est relié fonctionnellement au disque de sélection (5).

13. Frein de stationnement selon l'une des revendications 1 à 12, **caractérisé en ce que** l'actionneur de frein de stationnement (120) est disposé, dans une vue spatiale, sensiblement parallèlement à la barre de liaison (4) au-dessous de la barre de liaison (4).

14. Frein de stationnement selon l'une des revendications 1 à 13, **caractérisé en ce que** l'élément d'insertion à ressort (9) est réalisé sous la forme d'un ressort à branches dont les enroulements sont disposés autour du boulon de cliquet (1).

15. Frein de stationnement selon l'une des revendications 2 à 13, **caractérisé en ce que** l'élément d'insertion à ressort (9) est réalisé sous la forme d'un ressort de compression qui, vu axialement, entoure concentriquement, entièrement ou partiellement la tige de piston (17) du piston de frein de stationnement (12) .

16. Frein de stationnement selon la revendication 15, **caractérisé en ce que** le ressort de compression (9) est guidé sur des manchons (25, 26) afin de protéger la tige de piston (17) de tout endommagement, le manchon (26), prévu du côté du ressort de compression (9) qui est dirigé vers le boîtier de commande (11), venant en appui sur le boîtier du boîtier de commande (11) et l'autre manchon (25), prévu du côté du ressort de compression (9) qui est à l'opposé du boîtier de commande (11), étant maintenu par une sécurité à circlips (27), le circlips étant empêché de sortir radialement par le manchon (25).

17. Frein de stationnement selon la revendication 15, **caractérisé en ce qu'**une rainure circulaire (28) est prévue au niveau du boîtier de commande (11), laquelle s'étend autour d'un axe central de la tige de piston (17) et dans laquelle se trouve l'extrémité du ressort de compression (9) qui est dirigée vers le boîtier de commande (11), l'extrémité du ressort de compression (9) qui est opposée au boîtier de commande (11) étant guidée sur un manchon (25) qui est maintenu par une sécurité à circlips (27), le circlips étant empêché de sortir radialement par le manchon (25).

18. Frein de stationnement selon l'une des revendications 2 à 13, **caractérisé en ce que** l'élément d'insertion à ressort (9) est réalisé sous la forme d'un ressort à lame (35), dont une extrémité est vissée au boîtier de transmission et éventuellement à la plaque de guidage (8) et dont l'autre extrémité s'engage avec un contour (37) en forme de fourche sur la tige de piston (17) du piston de frein de stationnement (12) au moyen d'une tige (39) montée de manière imperdable dans la tige de piston (17)).

19. Frein de stationnement selon l'une des revendications 2 à 13, **caractérisé en ce qu'**au moins deux ressorts de compression (40, 41), disposés parallèlement l'un à l'autre, sont prévus comme élément d'insertion à ressort (9), lesquels sont disposés parallèlement à la tige de piston (17) du piston de frein de stationnement (12a) dans un guide de ressort (42), relié au boîtier de commande (11), et sont guidés dans ledit guide, une trajectoire de déplacement des au moins deux ressorts de compression (40, 41) est rendue possible par une glissière de guide de ressort (43) qui est reliée fonctionnellement à la tige de piston (17) du piston de frein de stationnement (12), qui est disposée de manière coulissante dans le guide de ressort (42) et sur laquelle s'appuie une extrémité des au moins deux ressorts de compression (40, 41), l'autre extrémité des au moins deux ressorts de compression (40, 41) s'appuyant sur le guide de ressort (42), la glissière de guide de ressort (43) étant montée à l'intérieur du guide de ressort (42) de manière imperdable par le biais de points de butée et la force de ressort des au moins deux ressorts de compression (40, 41) qui agit sur la glissière de guide de ressort (43) étant transmise à la tige de piston (17) du piston de frein de stationnement (12) au moyen d'un élément de machine.

20. Frein de stationnement selon l'une des revendications 1 à 19, **caractérisé en ce que** le disque de sélection (5) comporte deux branches (29, 30) comportant chacune un alésage circulaire, les alésages étant ménagés coaxialement les uns aux autres et servant à monter le disque de sélection (5 ; 5b) sur le boulon de cliquet (1), le cliquet (2 ; 2a) étant monté entre les deux branches.

21. Frein de stationnement selon l'une des revendications 1 à 20, **caractérisé en ce que**, pour maintenir le cliquet (2a) lorsque le frein de stationnement est désengagé (P_aus), une butée destinée au cliquet (2a) est prévue sur le disque de sélection (5b), laquelle empêche le cliquet (2a) de venir en contact avec la roue de frein de stationnement (3) lorsque le frein de stationnement est désengagé (P_aus).

22. Frein de stationnement selon la revendication 21, **caractérisé en ce qu'**une surface de butée (31) est prévue comme butée du disque de sélection (5b) et coopère avec une surface de butée correspondante (32) du cliquet (2a), aucun espace n'étant ménagé entre la surface de butée (31) du disque de sélection (5b) et les surfaces de butée correspondantes (32) du cliquet (2a) lorsque le frein de stationnement est désengagé (P_aus).

23. Frein de stationnement selon la revendication 21, **caractérisé en ce qu'**une surface de butée (31) est prévue comme butée du disque de sélection (5b) et coopère avec une surface de butée correspondante (32) du cliquet (2a), un espace (33) étant ménagé entre la surface de butée (31) du disque de sélection (5b) et les surfaces de butée correspondantes (32) du cliquet (2a) lorsque le frein de stationnement est désengagé (P_aus).

24. Frein de stationnement selon la revendication 21 ou 22, **caractérisé en ce qu'**un élément à ressort (34) est disposé sur l'une des surfaces de butée (31, 32) et est conçu de manière à supporter l'élément d'insertion à ressort (9), ou à le remplacer, lorsque le frein de stationnement est engagé.

25. Frein de stationnement selon la revendication 21 ou 22, **caractérisé en ce qu'**un élément à ressort (34) est disposé sur les deux surfaces de butée (31, 32) et est conçu de manière à venir en appui de l'élément d'insertion à ressort (9), ou à le remplacer, lorsque le frein de stationnement est engagé.

26. Frein de stationnement selon l'une des revendications 1 à 20, **caractérisé en ce que**, pour maintenir le cliquet (2a) lorsque le frein de stationnement est désengagé (P_aus), un élément à ressort (34a) est prévu qui empêche le cliquet (2a) de venir en contact avec la roue de frein de stationnement (3) lorsque le frein de stationnement est désengagé (P_aus).

27. Frein de stationnement selon la revendication 26, **caractérisé en ce que** l'élément à ressort (34a) est conçu de manière à supporter l'élément d'insertion à ressort (9), ou à le remplacer, lorsque le frein de stationnement est engagé.

28. Frein de stationnement selon la revendication 26 ou 27, **caractérisé en ce que** l'élément à ressort (34a) est précontraint sur le disque de sélection (5b) de manière à ce qu'une extrémité libre de l'élément à ressort (34a) ne vienne alors en contact en force avec le cliquet (2a) que lorsque le disque de sélection (5b) est tourné d'un angle prédéfini de sa position lorsque le frein de stationnement est engagé (P_ein) en direction de sa position lorsque le frein de stationnement est désengagé (P_aus),
de sorte que c'est seulement lorsque l'extrémité libre de l'élément à ressort (34a) agit en force sur le cliquet (2a) que la force de l'élément à ressort (34a), agissant sur le cliquet (2a), empêche le contact entre le cliquet (2a) et la roue de frein de stationnement (3) .

29. Frein de stationnement selon la revendication 26 ou 27, **caractérisé en ce que** l'élément à ressort (34a) est précontraint sur le disque de sélection (5b) de manière à ce qu'une extrémité libre de l'élément à ressort (34a) soit déjà en contact en force avec le cliquet (2a), lorsque le disque de sélection (5b) est dans sa position lorsque le frein de stationnement est engagé (P_ein) ; c'est seulement lorsque le disque de sélection (5b) est tourné de sa position lorsque le frein de stationnement est engagé (P ein) en direction de sa position lorsque le frein de stationnement est désengagé (P_aus) que la force de l'élément à ressort (34a), agissant sur le cliquet (2a) augmente de façon à empêcher de manière fiable le contact entre le cliquet (2a) et la roue de frein de stationnement (3).

30. Frein de stationnement selon l'une des revendications 1 à 29, **caractérisé en ce que** le cliquet (2a) est conçu géométriquement de manière à venir en appui en force sur l'élément de frein (7) aussi bien lorsque le frein de stationnement est engagé statiquement (P_ein) que lorsque le frein de stationnement est désengagé statiquement (P_aus).

31. Frein de stationnement selon la revendication 30, **caractérisé en ce que** le cliquet (2a) comporte une première surface fonctionnelle qui enserre l'élément de frein (7) entre le cliquet (2a) et la plaque de guidage (8) lorsque le frein de stationnement est engagé (P_ein), et **en ce que** le cliquet (2a) comporte une deuxième surface fonctionnelle qui vient en appui sur une surface correspondante de l'élément de frein (7) lorsque le frein de stationnement est désengagé (P_aus).

32. Procédé de montage de l'entraîneur (16) du disque de sélection (5) dans le piston de frein de stationnement (12a) d'un frein de stationnement selon l'une des revendications 2 à 11, l'élément d'insertion à ressort (9) étant conçu comme un ressort de compression qui, vu axialement, entoure concentriquement, entièrement ou partiellement, la tige de piston (17) du piston de frein de stationnement (12) ,
**caractérisé par** les étapes de procédé suivantes :
a) pousser le piston de frein de stationnement (12) dans un alésage de piston du boîtier de commande (11),
b) insérer ensuite une unité d'encliquetage à commande électrique (23) dans l'alésage de piston, l'unité d'encliquetage (23) comportant des éléments d'encliquetage pour les deux positions extrêmes « frein de stationnement engagé » et « frein de stationnement désengagé » qui empêchent, à l'état non alimenté en courant, que le piston de frein de stationnement (12) soit poussé dans sa position « frein de stationnement engagé » ;
c) monter ensuite le ressort de compression (9) sur la tige de piston (17) ;
d) visser ensuite le boîtier de commande (11) sur un boîtier de transmission ou une unité de commande de transmission électrohydraulique, le piston de frein de stationnement (12) étant dans sa position « frein de stationnement engagé » avant le vissage, et le disque de sélection (5) étant dans sa position « frein de stationnement désengagé » avant le vissage ;
e) puis alimenter en courant l'unité d'encliquetage (23) de façon à comprimer le ressort de compression (9) sur la tige de piston (17) jusqu'à ce que la tige de piston (17) atteigne sa position « frein de stationnement désengagé »,
c'est seulement lorsque le piston de frein de stationnement (12) atteint sa position « frein de stationnement désengagé » que l'alimentation en courant de l'unité d'encliquetage (23) est interrompue de manière à ce que l'unité d'encliquetage (23) viennent dans sa position « frein de stationnement désengagé », l'entraîneur (16) et l'évidement (15) du piston de frein de stationnement (12) étant disposés l'un au-dessus de l'autre en position « frein de stationnement désengagé » ;
f) guider ensuite l'entraîneur (16) de manière ciblée sur la tige (19) au moyen d'un outil approprié.
